# EUROPEAN PATENT APPLICATION

(11) **EP 4 851 935 A1**
(43) Date of publication of application: **09.12.2026**
(21) Application number: 25881816.0
(22) Date of filing: 20.10.2025
(51) Int. Cl.: G06T 13/40

(54) **ANIMATION FRAME GENERATION METHOD AND APPARATUS, AND ELECTRONIC DEVICE AND STORAGE MEDIUM**

(30) Priority: 22.10.2024 CN 202411481946
(71) Applicant: Tencent Technology (Shenzhen) Company Limited, Shenzhen, Guangdong 518057 (CN)
(72) Inventor: LI, Lei, Shenzhen, Guangdong 518057 (CN)
(74) Representative: AWA Sweden AB
(86) International application number: PCT/CN2025/128728
(87) International publication number: WO 2026/086733

(57) **Abstract**

Disclosed in the embodiments of the present disclosure are an animation frame generation method and apparatus, and an electronic device and a storage medium. The method comprises: acquiring first pose data of a first object in a first animation frame and second pose data of the first object in a second animation frame, wherein the second animation frame is an animation frame subsequent to the first animation frame; on the basis of the first pose data and the second pose data, using an action classifier to classify an action of the first object to obtain an action type feature; encoding the first pose data to generate a first frame feature; and concatenating the first frame feature with the action type feature to form a target frame feature, and on the basis of the target frame feature, performing decoding to obtain at least one intermediate animation frame between the first animation frame and the second animation frame.

## Description

### RELATED APPLICATION

This application claims priority to Chinese Patent Application No. 202411481946.4, filed with the China National Intellectual Property Administration on October 22, 2024 and entitled "ANIMATION FRAME GENERATION METHOD AND APPARATUS, ELECTRONIC DEVICE, AND STORAGE MEDIUM", which is incorporated herein by reference in its entirety.

### FIELD OF THE TECHNOLOGY

The present disclosure relates to the field of artificial intelligence technologies, and in particular, to an animation frame generation method and apparatus, an electronic device, and a storage medium.

### BACKGROUND OF THE DISCLOSURE

With vigorous development of the animation industry, especially in the fields such as games, movies, and virtual reality, there is a growing demand for high-quality animations. Currently, animation smoothness is usually improved through frame supplementation. Specifically, a blank frame may be initially filled based on linear interpolation, and then an intermediate animation frame for frame supplementation is generated by using a model.

### SUMMARY

The following is an overview of a subject matter described in detail in the present disclosure. The overview is not intended to limit the protection scope of the claims.

Embodiments of the present disclosure provide an animation frame generation method and apparatus, an electronic device, and a storage medium, to relieve an ambiguity problem and improve accuracy of generating an intermediate animation frame.

Some embodiments of the present disclosure provide an animation frame generation method, including:
obtaining first posture data of a first object in a first animation frame and second posture data of the first object in a second animation frame, the second animation frame being temporally after the first animation frame;
obtaining an action type feature indicating an action type of the first object by an action classifier based on the first posture data and the second posture data;
encoding the first posture data, to generate a first frame feature; and
concatenating the first frame feature and the action type feature into a concatenated frame feature, and decoding the concatenated frame feature to obtain at least one intermediate animation frame temporally between the first animation frame and the second animation frame.

Some embodiments of the present disclosure further provide an animation frame generation apparatus, including:
a data obtaining module, configured to obtain first posture data of a first object in a first animation frame and second posture data of the first object in a second animation frame, the second animation frame being temporally after the first animation frame;
an action classification module, configured to obtain an action type feature indicating an action type of the first object by an action classifier based on the first posture data and the second posture data;
an encoding module, configured to encode the first posture data, to generate a first frame feature; and
a generation module, configured to concatenate the first frame feature and the action type feature into a concatenated frame feature, and decode the concatenated frame feature to obtain at least one intermediate animation frame temporally between the first animation frame and the second animation frame.

Some embodiments of the present disclosure further provide an electronic device, including a memory and a processor, the memory having a computer program stored therein, and the processor implementing the foregoing animation frame generation method when executing the computer program.

Some embodiments of the present disclosure further provide a computer readable storage medium, the storage medium having a computer program stored therein, and the computer program implementing the foregoing animation frame generation method when executed by a processor.

Some embodiments of the present disclosure further provide a computer program product, the computer program product including a computer program, and the computer program being stored in a computer-readable storage medium. A processor of a computer device reads the computer program from the computer-readable storage medium and executes the computer program, to cause the computer device to implement the foregoing animation frame generation method.

Other features and advantages of the present disclosure are described in the following specification, and in part, become apparent from the specification, or may be learned through implementation of the present disclosure.

### BRIEF DESCRIPTION OF THE DRAWINGS

FIG. 1 is a schematic diagram of an implementation environment according to some embodiments of the present disclosure;
FIG. 2 is a flowchart of an animation frame generation method according to some embodiments of the present disclosure;
FIG. 3 is a schematic diagram of an initial animation sequence according to some embodiments of the present disclosure;
FIG. 4 is a schematic diagram of an action classifier according to some embodiments of the present disclosure;
FIG. 5 is a schematic diagram of generating an intermediate animation frame according to some embodiments of the present disclosure;
FIG. 6 is a schematic diagram of a second recurrent neural network according to some embodiments of the present disclosure.
FIG. 7 is a schematic diagram of a network structure of a first recurrent sub-network according to some embodiments of the present disclosure;
FIG. 8 is a schematic diagram of training a second recurrent sub-network according to some embodiments of the present disclosure;
FIG. 9 is a schematic diagram of a decoding network according to some embodiments of the present disclosure;
FIG. 10 is a schematic diagram of training a decoding network according to some embodiments of the present disclosure;
FIG. 11 is an overall schematic flowchart of an animation frame generation method according to some embodiments of the present disclosure;
FIG. 12 is a schematic diagram of playback of a complete animation sequence generated according to some embodiments of the present disclosure;
FIG. 13 is a schematic diagram of an operation of an animation production application according to some embodiments of the present disclosure;
FIG. 14 is a schematic diagram of a structure of an animation frame generation apparatus according to some embodiments of the present disclosure;
FIG. 15 is a block diagram of a partial structure of a terminal according to some embodiments of the present disclosure; and
FIG. 16 is a block diagram of a partial structure of a server according to some embodiments of the present disclosure.

### DESCRIPTION OF EMBODIMENTS

To make objectives, technical solutions, and advantages of the present disclosure clearer, the present disclosure is further described below in detail with reference to accompanying drawings and embodiments. Specific embodiments described herein are merely used to explain the present disclosure rather than limit the present disclosure.

In each specific implementation of the present disclosure, when related processing needs to be performed based on data related to an object characteristic, such as object attribute information or an attribute information set, permission or consent from the object is first obtained, and collection, use, processing, and the like of the data comply with related laws, regulations, and standards. The object may be a user. In addition, in the embodiments of the present disclosure, when the object attribute information needs to be obtained, separate permission or separate consent from the object is obtained in a manner, for example, by using a popup window or by jumping to a confirmation page. After the separate permission or the separate consent from the object is clearly obtained, necessary object-related data configured for enabling the embodiments of the present disclosure to run normally is obtained.

In the embodiments of the present disclosure, the term "module" or "unit" refers to a computer program with a predetermined function or a part of a computer program and works, together with other related parts, to implement a predetermined target, and may be completely or partially implemented by using software, hardware (for example, a processing circuit or a memory) or a combination thereof. Similarly, one processor (or a plurality of processors or memories) may be configured to implement one or more modules or units. In addition, each module or unit may be a part of an overall module or unit including the module or unit function. In the following descriptions, related "some embodiments" describe a subset of all possible embodiments. However, it may be understood that the "some embodiments" may be the same subset or different subsets of all the possible embodiments, and may be combined with each other without conflict.

For ease of understanding the technical solutions provided in the embodiments of the present disclosure, some key terms used in the embodiments of the present disclosure are first explained herein.

A long short-term memory (LSTM) is an architecture that avoids a vanishing problem in a long-term dependency by introducing a specific design of a self-loop, maintains flow of information in a long time scale by using a linear self-connection unit, and controls addition, deletion, and output of the information by using a forget gate, an input gate, and an output gate.

A multi-layer perceptron (MLP) is a feedforward neural network including a plurality of neuron layers, and includes an input layer, one or more hidden layers, and an output layer. A neuron at each layer is fully connected to all neurons at a next layer, and performs information transmission by using a weight. Such a structure enables the MLP to capture all feature combinations of inputted data, and maps input into output by using a plurality of fully-connected layers and a non-linear activation function.

A softmax function is a commonly used activation function, is usually used at an output layer with a plurality of classification problems, and can convert a vector of any real value into a probability distribution. A value of each element represents a probability of a corresponding class.

A conditional variational autoencoder (CVAE) is a deep learning model in which a control condition concept is introduced, and includes an encoder and a decoder. The encoder compresses inputted data into a low-dimensional hidden variable, and the decoder reconstructs data based on the hidden variable and a control condition, so that a sample meeting a particular condition can be generated.

With the vigorous development of the animation industry, especially in the fields such as games, movies, and virtual reality, there is a growing demand for high-quality animations. Currently, during animation generation, a blank frame may be initially filled based on linear interpolation, and then an initially filled sequence is inputted into a model for prediction. Finally, a complete animation sequence is outputted. Alternatively, potential code of a blank frame may be generated by using a model, and then potential code of each blank frame is inputted into another pre-training model to obtain a corresponding animation frame. However, the foregoing manner easily has an ambiguity problem, failing to match a correct action type for an inputted key frame, that is, a walking animation needs to be generated originally, but a running animation is generated by a model instead. Consequently, a type of the generated animation does not meet an actual requirement. Therefore, accuracy of generating an intermediate animation frame is to be improved.

Based on this, the embodiments of the present disclosure provide an animation frame generation method and apparatus, an electronic device, and a storage medium, to perform constraint by using action information of an object, thereby effectively relieving an ambiguity problem and improving accuracy of generating an intermediate animation frame.

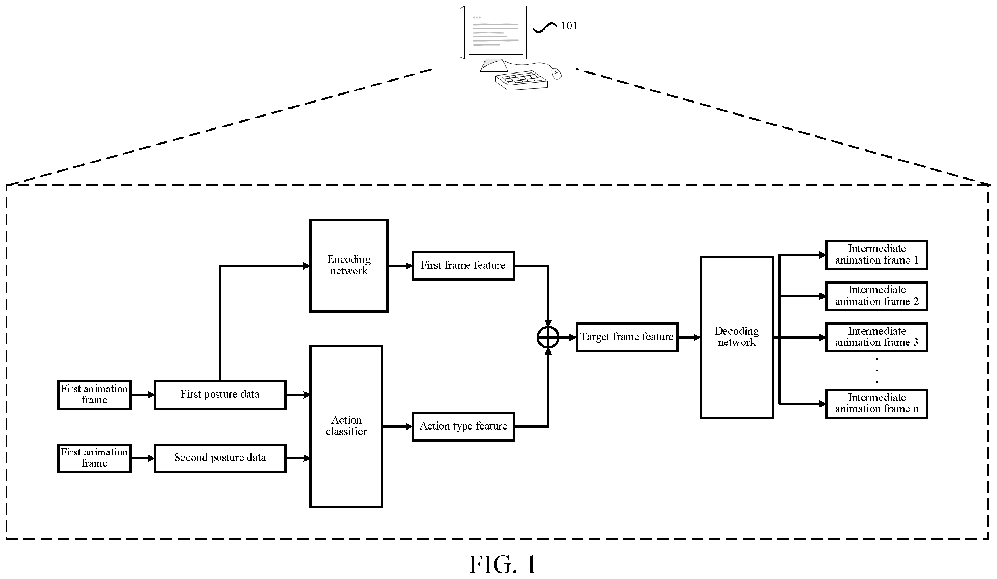

FIG. 1 is a schematic diagram of an implementation environment according to some embodiments of the present disclosure. The implementation environment includes a terminal 101.

For example, the terminal 101 obtains first posture data of a first object in a first animation frame and second posture data of the first object in a second animation frame, and classifies an action of the first object based on the first posture data and the second posture data by using an action classifier, to obtain an action type feature. Then, the first posture data is encoded, to generate a first frame feature, the first frame feature and the action type feature are concatenated into a target frame feature (also referred to as a concatenated frame feature), and decoding is performed based on the target frame feature, to obtain at least one intermediate animation frame temporally between the first animation frame and the second animation frame.

IA process of generating the at least one intermediate animation frame may alternatively be performed on a server. Specifically, the terminal 101 obtains the first posture data of the first object in the first animation frame and the second posture data of the first object in the second animation frame, and transmits the first posture data and the second posture data to the server. The server classifies the action of the first object based on the first posture data and the second posture data by using the action classifier, to obtain the action type feature. Then, the first posture data is encoded, to generate the first frame feature, the first frame feature and the action type feature are concatenated into the target frame feature, decoding is performed based on the target frame feature, to obtain the at least one intermediate animation frame temporally between the first animation frame and the second animation frame, and the at least one obtained intermediate animation frame is transmitted to the terminal 101 in chronological order of generation.

The server may be an independent physical server, or a server cluster or distributed system including a plurality of physical servers, or may be a cloud server providing basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform. In addition, the server may alternatively be a node server in a block chain network.

The terminal 101 may be a mobile phone, a computer, an intelligent voice interaction device, an intelligent wearable device, an intelligent appliance, an in-vehicle terminal, or the like, but is not limited thereto. The terminal 101 and the server may be directly or indirectly connected in a wired or wireless communication manner. This is not limited in this embodiment of the present disclosure herein.

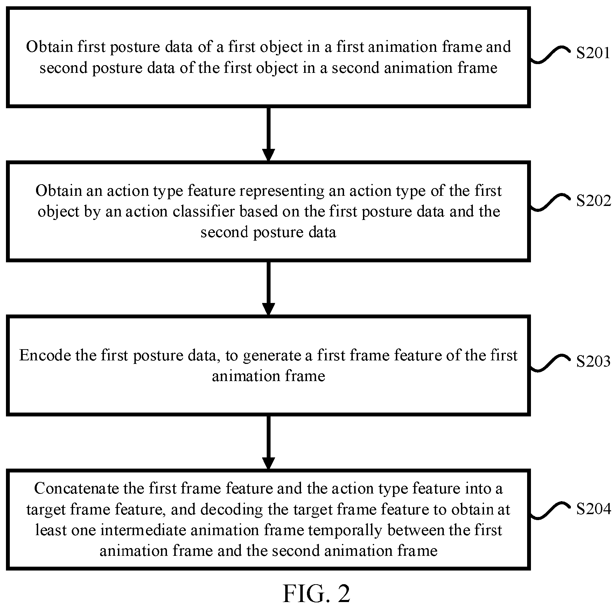

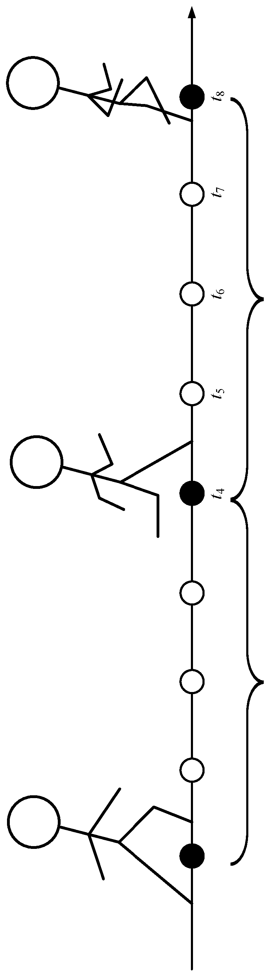

FIG. 2 is a flowchart of an animation frame generation method according to some embodiments of the present disclosure. The animation frame generation method may be executed by a terminal, or may be cooperatively executed by a terminal and a server. The animation frame generation method includes, but is not limited to, the following operation S201 to operation S204.

Operation S201: Obtain first posture data of a first object in a first animation frame and second posture data of the first object in a second animation frame.

The first animation frame and the second animation frame are key animation frames that are set in an initial animation sequence, and the second animation frame is an animation frame temporally after the first animation frame. The initial animation sequence is a basic animation frame of a to-be-generated animation sequence, and includes at least two key animation frames and at least one blank animation frame. The key animation frame is configured for indicating a key action node of the first object in a motion change process, and defines posture data of the first object at the key action node. The blank animation frame refers to an animation frame without any action or state change in the animation sequence, is located temporally between the first animation frame and the second animation frame, may be considered as a placeholder in the initial animation sequence, and is configured for instructing a subsequent network model to generate, at the blank animation frame, an animation frame associated with the key animation frame (that is, an intermediate animation frame generated below). The first object is an object presented in the first animation frame and the second animation frame. The posture data is quantified information that describes a position and a direction of an object (such as a human body, a robot, or a virtual character) in a three-dimensional space and a relative relationship between components (usually joints or skeletons) of the object, accurately records a "posture state" of the object at a particular moment in a mathematical form, and is basic data in fields such as animation generation, motion analysis, and robot control.

Specifically, in a process of generating a complete animation sequence, the initial animation sequence is segmented into at least one animation sub-sequence based on the key animation frame. Each animation sub-sequence includes the two key animation frames (the first animation frame and the second animation frame) and the at least one blank animation frame. The first animation frame is a 1st animation frame in the animation sub-sequence, the second animation frame is a last animation frame in the animation sub-sequence, and a quantity of blank animation frames is preset. When the initial animation sequence is segmented into at least two animation sub-sequences, a second animation frame of a former animation sub-sequence is the same as a first animation frame of a latter animation sub-sequence. Alternatively, when the animation sequence is relatively complex or an action is abnormal, two adjacent key animation frames may be set, a former key animation frame is used as a second animation frame of the former animation sub-sequence, and a latter key animation frame is used as a first animation frame of the latter animation sub-sequence, so that the second animation frame of the former animation sub-sequence is adjacent to the first animation frame of the latter animation sub-sequence. The key animation frame is set, so that a neural network can accurately learn posture data of a key action node in the animation sequence. In addition, the predetermined quantity of blank animation frames are inserted between the two key animation frames, so that the neural network can determine, based on the quantity of blank animation frames and insertion positions, a quantity of times of circularly generating an animation frame and corresponding posture data, thereby effectively improving efficiency and accuracy of generating an intermediate animation frame. In addition, the policy of segmenting the initial animation sequence into a plurality of animation sub-sequences enables an intermediate animation frame of a current animation sub-sequence to be generated based on a previous animation sub-sequence, thereby effectively avoiding a problem of action incoherence or action chaos that may occur during global generation. When an intermediate animation frame generated in an animation sub-sequence is offset, the intermediate animation frame of the animation sub-sequence is regenerated with reference to posture data of two animation sub-sequences, namely, a previous animation sub-sequence and a next animation sub-sequence, and does not need to be globally generated, thereby effectively improving flexibility, efficiency, and quality of generating the intermediate animation frame.

FIG. 3 is a schematic diagram of an initial animation sequence according to some embodiments of the present disclosure. Three key animation frames are set in the initial animation sequence, and are respectively animation frames corresponding to moments *t*₀ , *t*₄ , and *t*₈. The three key animation frames define key action nodes of a stick figure during running. A blank animation frame *t*₁ , a blank animation frame *t*₂ , and a blank animation frame *t*₃ are set between the key animation frame *t*₀ and the key animation frame *t*₄ . A blank animation frame *t*₅ , a blank animation frame *t*₆ , and a blank animation frame *t*₇ are set between the key animation frame *t*₄ and the key animation frame *t*₈. The initial animation sequence is segmented into a first animation sub-sequence and a second animation sub-sequence based on the key animation frames, the first animation sub-sequence includes the key animation frame *t*₀ , the key animation frame *t*₄ , and the three blank animation frames ( *t*₁ , *t*₂ , and *t*₃ ). The second animation sub-sequence includes the key animation frame *t*₄ , the key animation frame *t*₈ , and the three blank animation frames (*t*₅ , *t*₆ , and *t*₇).

Next, the first posture data of the first object is obtained in the first animation frame, the second posture data of the first object is obtained in the second animation frame, and a subsequent operation of generating an intermediate animation frame is performed based on the first posture data and the second posture data. The posture data is data describing a current posture state of the first object, and may include position coordinates and a rotation parameter of a joint point. The rotation parameter is a rotation state of the joint point, including a rotation direction, a rotation angle, and the like.

Operation S202: Obtain an action type feature indicating an action type of the first object by an action classifier based on the first posture data and the second posture data.

The action type feature is configured for indicating a type of a current action of the first object, that is, a type of an action executed by the first object in a process of transforming from the first posture data of the first animation frame to the second posture data of the second animation frame. For example, the action type feature may be a probability distribution of a plurality of action types, and may be represented as a vector. For example, a probability that the action of the first object is of an action type A is 0.3, and a probability that the action of the first object is of an action type B is 0.7. In this case, the action type feature may be represented as (0.3, 0.7). Alternatively, the action type feature may be configured for indicating a text feature of an action type of the first object. Specifically, a text corresponding to the action type of the first object may be encoded, to obtain the action type feature. For example, if the action type of the first object is "running", a text "running" is encoded to obtain a corresponding action type feature.

In some embodiments, the action type feature represents a probability distribution of the action type of the first object over a plurality of action categories (i.e., action types). In a process of recognizing (or classifying) the action type of the first object based on the first posture data and the second posture data by using the action classifier, to obtain the action type feature, specifically, the first posture data and the second posture data may be inputted into a first recurrent neural network for feature extraction, to obtain a first intermediate feature; the first intermediate feature is inputted into a dimension conversion network, dimension conversion is performed based on an action type quantity of the plurality of action types, to obtain a second intermediate feature; and the action of the first object is classified based on the second intermediate feature, to obtain the action type feature. The first recurrent neural network is a feature extraction network, is configured to perform feature extraction on the inputted posture data, and may be a long short-term memory (LSTM), or may be a recurrent neural network (RNN). This is not specifically limited in this application. The dimension conversion network is configured to convert, into a feature dimension suitable for a subsequent operation, a feature dimension of an inputted feature inputted into the dimension conversion network, and may be a multi-layer perceptron (MLP), or may be a network formed by processing layers such as a convolution layer whose convolution kernel size is 1×1, a batch normalization layer, and a pooling layer. This is not specifically limited in this application. The action type quantity is a quantity of action types learned by the first recurrent neural network and the dimension conversion network. The first recurrent neural network and the dimension conversion network are introduced to classify the action of the first object, so that the action of the first object can be dynamically captured in a time dimension, thereby effectively improving accuracy of classifying the action of the first object.

Specifically, data concatenation is performed on the first posture data and the second posture data, to obtain concatenated posture data. The concatenated posture data is inputted into the first recurrent neural network for feature extraction, to obtain the first intermediate feature. The first intermediate feature is inputted into the dimension conversion network. Dimension conversion is performed based on the quantity of action types. A feature dimension value of the first intermediate feature is converted into a feature dimension value consistent with the quantity of action types, to obtain the second intermediate feature. Next, the action of the first object is classified based on the second intermediate feature. A probability value that the action of the first object belongs to each action type is outputted by using a softmax function as an output layer. The probability value of each action type is normalized, to obtain a probability distribution of action types corresponding to the action of the first object. The probability distribution of the action types is used as the action type feature corresponding to the current action of the first object. In addition to using the softmax function as the output layer for classification, another classification network or function may alternatively be used for classification, such as a support vector machine or a sigmoid function. This is not specifically limited in this application. The first intermediate feature may be an action feature vector obtained by the first recurrent neural network performing action feature extraction on the inputted concatenated posture data, and the second intermediate feature is an action feature vector obtained by the dimension conversion network performing dimension reduction on the first intermediate feature.

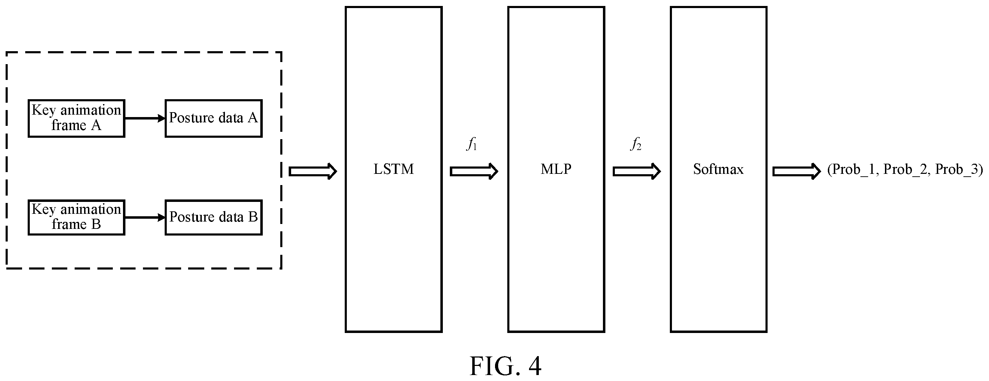

For example, it is assumed that a quantity of action types that can be recognized by training the action classifier is 3. FIG. 4 is a schematic diagram of an action classifier according to some embodiments of the present disclosure. Posture data A of the first object in a key animation frame A and posture data B of the first object in a key animation frame B are obtained. Data concatenation is performed on the posture data A and the posture data B, and then the posture data A and the posture data B are inputted into the LSTM for feature extraction, to obtain a first intermediate feature *f*₁. A feature dimension of the first intermediate feature *f*₁ is 5. Then, the first intermediate features *f*₁ is inputted into the MLP for feature dimension conversion. An input layer of the MLP includes five neurons, a hidden layer includes seven neurons, and an output layer includes three neurons. The feature dimension of the first intermediate feature *f*₁ is 5. Therefore, a quantity of neurons at the input layer is 5. Because a feature dimension of an outputted feature is the same as a quantity of action types, a quantity of neurons at the output layer is set to 3. The first intermediate feature *f*₁ sequentially goes through the input layer, the hidden layer, and the output layer of the MLP, to obtain a second intermediate feature *f*₂ whose feature dimension is 3. The second intermediate feature *f*₂ is inputted into an output layer of the action classifier, and probability values (Prob_1, Prob_2, Prob_3) that the action of the first object belongs to the three action types are outputted by using the softmax function. When feature dimension conversion is performed by using the MLP, the hidden layer is not required, and the hidden layer and a quantity of neurons at the hidden layer may be set based on complexity of an inputted feature.

In some embodiments, before the action of the first object is classified based on the first posture data and the second posture data by using the action classifier, to obtain the action type feature, joint training may be performed on the first recurrent neural network and the dimension conversion network in the action classifier. First sample posture data of a first sample object in a first sample animation sequence may be obtained. The first sample posture data is inputted into the first recurrent neural network for feature extraction, to obtain a first sample feature. The first sample feature is inputted into the dimension conversion network. Dimension conversion is performed based on the action type quantity of the plurality of action types, to obtain a second sample feature. An action of the first sample object is classified based on the second sample feature, to obtain a sample type feature. The first sample animation sequence is formed by a plurality of other animation sequences having content similar to that of the first animation frame and the second animation frame, and all animation frames in the other animation sequences include specific posture data. The first sample animation sequence includes a key sample frame and a blank sample frame. The key sample frame is an animation frame selected from the other animation sequences and having a key action node. The blank sample frame is another animation frame corresponding to another time point in the other animation sequences except a time point corresponding to the key animation frame, and the animation frame corresponding to the another time point is set to "0", that is, the another animation frame includes no posture data. The first sample posture data is data similar to the first posture data and the second posture data of the first object, and includes position coordinates and a rotation parameter of a joint point. The sample type feature is a feature similar to the action type feature, and may be configured for indicating a probability distribution of a plurality of action types, or may be configured for indicating text features of a plurality of action types.

Specifically, before the action of the first object is classified, joint training needs to be first performed on the first recurrent neural network and the dimension conversion network in the action classifier. First, the first sample posture data of the first sample object in each key sample frame in the first sample animation sequence is obtained, and the first sample posture data is used as training data. Next, the first sample posture data is inputted into the first recurrent neural network for feature extraction, to obtain the first sample feature. Then, the first sample feature is inputted into the dimension conversion network. Dimension conversion is performed based on the action type quantity of action types, to convert a feature dimension value of the first sample feature into a feature dimension value consistent with the action type quantity of action types, to obtain the second sample feature. Finally, the second sample feature is inputted into an output layer including the softmax function, a probability distribution of predicted action types of the action of the first sample object is outputted, and the probability distribution of the action types is used as a sample type feature.

Next, a first action type label of the first sample object is obtained, a first loss is determined based on a difference between the first action type label and the sample type feature, and the first recurrent neural network and the dimension conversion network are trained based on the first loss. Specifically, the first action type label is a label pre-configured based on the action of the first sample object, and one first sample object corresponds to one first action type label. First, an action type having a highest probability value is determined based on the sample type feature, a name of the action type having the highest probability value is used as a predicted action type label, then the first action type label of the first sample object in the first sample animation sequence is obtained, a first loss is determined based on a difference between the first action type label and the predicted action type label, where the first loss may be obtained through calculation based on a cross-entropy loss function, and a training direction and an optimization direction of the first recurrent neural network and the dimension conversion network are instructed based on the first loss. The first loss is determined by introducing the first action type label, so that training accuracy can be improved. In addition, the first recurrent neural network and the dimension conversion network are trained based on the first loss, so that the first recurrent neural network and the dimension conversion network are associated, thereby improving accuracy during subsequent classification.

When the first sample object in the first sample animation sequence corresponds to a unique first action type label, in this case, the first loss may be represented by the following cross-entropy function: ${Loss}_{class} = \frac{1}{N} {\sum }_{j = 1}^{N} {\sum }_{i = 1}^{C} {y}_{ji} log {\hat{y}}_{ji}$ where *N* represents a batch size, *C* represents the quantity of action types, *yⱼᵢ* is the first action type label, and *ŷⱼᵢ* is the predicted action type label. Alternatively, when the first sample object in the first sample animation sequence corresponds to at least two first action type labels, in this case, the first loss may be represented by the following cross-entropy function: ${Loss}_{class} = \frac{1}{N} {\sum }_{j = 1}^{N} {\sum }_{i = 1}^{C} \left[-{y}_{ji} log {\hat{y}}_{ji}-\left(1-{y}_{ji}\right)log\left(1-{\hat{y}}_{ji}\right)\right]$

In some embodiments, the action type feature may further be configured for indicating text features of the plurality of action types. Specifically, data concatenation is performed on the first posture data and the second posture data, to obtain concatenated posture data. The concatenated posture data is inputted into the first recurrent neural network for feature extraction, to obtain the first intermediate feature. The first intermediate feature is inputted into the dimension conversion network. Dimension conversion is performed based on the type quantity of action types. A feature dimension value of the first intermediate feature is converted into a feature dimension value consistent with the action type quantity of action types, to obtain the second intermediate feature. Next, the action of the first object is classified based on the second intermediate feature. A probability value that the action of the first object belongs to each action type is outputted by using a softmax function as an output layer. The probability value of each action type is normalized, to obtain a probability distribution of action types corresponding to the action of the first object. Names of the action types corresponding to probability values are outputted in descending order of the probability values. Corresponding text features are sequentially extracted from the names of the action types. The text features corresponding to the names of the action types are combined, as the action type feature, in an output order of the names of the action types. Alternatively, a name of an action type having a highest probability value may be outputted, a corresponding text feature is extracted from the name of the action type having the highest probability value, and the text feature corresponding to the name of the action type having the highest probability value is used as the action type feature.

Operation S203: Encode the first posture data, to obtain a first frame feature corresponding to the first animation frame.

Specifically, the first posture data of the first object in the first animation frame is inputted into a first encoding network, to encode the first posture data, to obtain the first frame feature corresponding to the first animation frame. The first encoding network is configured to encode posture data, and may be a multi-layer perceptron (MLP), a convolutional neural network, or a transformer network. The first frame feature is a feature obtained through the first coding network, may be a feature directly outputted through a neural network, where in this case, an encoded feature is a pixel feature, or may be a feature obtained by compressing encoding. In this case, the encoded feature is a hidden variable.

Operation S204: Concatenate the first frame feature and the action type feature into a target frame feature, and decoding the target frame feature to obtain at least one intermediate animation frame temporally between the first animation frame and the second animation frame.

The target frame feature is a feature obtained through concatenation based on the first frame feature, and the target frame feature may be directly inputted into a decoding network for decoding. In addition, the target frame feature may alternatively be inputted into a second recurrent neural network for mapping, to obtain a first to-be-decoded feature, and then the first to-be-decoded feature is decoded to obtain an intermediate animation frame. In the following descriptions, a target intermediate frame feature is a target frame feature obtained based on the obtained intermediate animation frame, and a next intermediate animation frame is obtained based on a current target intermediate frame feature.

In some embodiments, the performing decoding based on the target frame feature, to obtain at least one intermediate animation frame temporally between the first animation frame and the second animation frame may specifically be inputting the target frame feature into the second recurrent neural network for mapping, outputting at least one first to-be-decoded feature in an autoregressive manner, and inputting each first to-be-decoded feature into the decoding network for decoding, to obtain the at least one intermediate animation frame temporally between the first animation frame and the second animation frame. The second recurrent neural network is a feature mapping network, configured to perform feature mapping on the target frame feature, and may be an LSTM, an RNN, or a network combining an LSTM or an RNN with another network or another structure. This is not specifically limited in this application. The to-be-decoded feature outputted by the second recurrent neural network is a high-order action representation that is deeply extracted and that includes rich space-time context information, retains most essential information required for accurate action recognition, reduces data redundancy, and may provide better input for a subsequent decoding operation.

Specifically, the at least one intermediate animation frame exists between the first animation frame and the second animation frame. The target frame feature is inputted into the second recurrent neural network for feature mapping. The first to-be-decoded feature is outputted. The first to-be-decoded feature is inputted into the decoding network for decoding, to obtain a first intermediate animation frame that is temporally after the first animation frame and that is adjacent to the first animation frame. After the first intermediate animation frame is obtained, a first intermediate frame feature is obtained based on the first intermediate animation frame (that is, third posture data of the first object in the first intermediate animation frame is encoded, to generate the first intermediate frame feature corresponding to the first intermediate animation frame). The first intermediate frame feature and the action type feature are concatenated into a target intermediate frame feature. The target intermediate frame feature is inputted into the second recurrent neural network for feature mapping. The first to-be-decoded feature is outputted in the autoregressive manner. The first to-be-decoded feature is inputted into the decoding network for decoding, to obtain a second intermediate animation frame that is temporally after the first intermediate animation frame and that is adjacent to the first intermediate animation frame. The foregoing operations are repeated, to sequentially obtain the at least one intermediate animation frame temporally between the first animation frame and the second animation frame, until a quantity of circulation times reaches a preset quantity of blank animation frames. Because the target frame feature includes the action type feature, when decoding is performed based on the target frame feature to obtain the intermediate animation frame temporally between the first animation frame and the second animation frame, constraint can be performed by using action information of the first object, thereby effectively relieving an ambiguity problem, and effectively improving accuracy of generating the intermediate animation frame. In addition, the target frame feature is inputted into the second recurrent neural network for mapping, and the at least one first to-be-decoded feature is outputted in the autoregressive manner, so that coherent intermediate animation frames can be outputted.

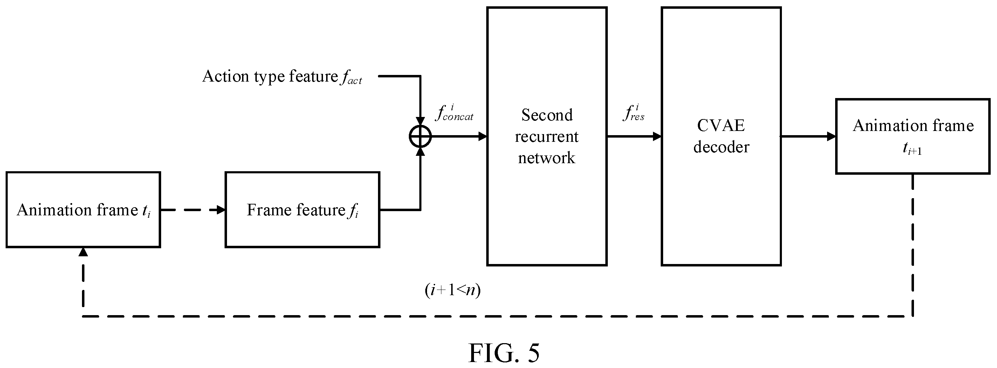

FIG. 5 is a schematic diagram of generating an intermediate animation frame according to some embodiments of the present disclosure. A decoding network may be a CVAE decoder. A current frame is an animation frame *tᵢ* ( *i* ∈[0, *n]*). An animation frame *t*₀ is a first animation frame. An animation frame *t*₁ to an animation frame *tₙ* are generated intermediate animation frames. *tₙ* is an *n*^{th} generated intermediate animation frame. Based on the intermediate animation frame *tᵢ* , a first intermediate frame feature *fᵢ* is obtained. The first intermediate frame feature *fᵢ* and an action type feature *f_{act}* are concatenated to obtain a target intermediate frame feature ${f}_{concat}^{i}$. The target intermediate frame feature ${f}_{concat}^{i}$ is inputted into a second recurrent neural network for feature mapping. A first to-be-decoded feature ${f}_{res}^{i}$ is outputted. Then, the first to-be-decoded feature ${f}_{res}^{i}$ is inputted into the CVAE decoder for decoding, to generate an intermediate animation frame *t*_{*i*+1}. In this case, generation of the intermediate animation frame is completed once. Next, the generated intermediate animation frame *t*_{*i*+1} is used as a current frame to repeat the foregoing operations. A maximum quantity *n* of circulation times is set during the generation of the intermediate animation frame (that is, a preset quantity of blank animation frames). When a quantity *i*+1 of times of generating the intermediate animation frame is less than the quantity *n* of circulation times, the foregoing operations are repeated to continue generating the intermediate animation frame. When the quantity *i*+1 of times of generating the intermediate animation frame is equal to the quantity *n* of circulation times, generation of an intermediate animation frame that needs to be generated between the first animation frame and a second animation frame is completed, and the generation of the intermediate animation frame stops.

For example, a current initial animation sequence includes a first animation frame, a second animation frame, and two blank animation frames, and a quantity of circulation times of generating an intermediate animation frame this time is determined as two based on the quantity of blank animation frames. First, based on the first animation frame *t*₀ , a first frame feature *f*₀ is obtained. The first frame feature *f*₀ and the action type feature *f_{act}* are concatenated to obtain a target frame feature ${f}_{concat}^{0}$. The target frame feature *f_{c}*⁰*_{oncat}* is inputted into the second recurrent neural network for feature mapping. A first to-be-decoded feature ${f}_{res}^{0}$ is outputted. Then, the first to-be-decoded feature ${f}_{res}^{0}$ is inputted into the CVAE decoder for decoding, to generate the intermediate animation frame *t*₁ . Because a quantity (1) of generation times is less than the quantity (2) of circulation times, based on the intermediate animation frame *t*₁ , a first intermediate frame feature *f*₁ is obtained. The first intermediate frame feature *f*₁ and the action type feature *f_{act}* are concatenated to obtain a target intermediate frame feature ${f}_{concat}^{1}$. The target intermediate frame feature ${f}_{concat}^{1}$ is inputted into the second recurrent neural network for feature mapping. A first to-be-decoded feature ${f}_{res}^{1}$ is outputted. Then, the first to-be-decoded feature ${f}_{res}^{1}$ is inputted into the CVAE decoder for decoding, to generate the intermediate animation frame *t*₂ . In this case, the quantity (2) of generation times is equal to the quantity (2) of circulation times, and continuing generating an intermediate animation frame stops.

In some embodiments, the second recurrent neural network includes a first recurrent sub-network and a second recurrent sub-network. A process of inputting the target frame feature into the second recurrent neural network for mapping, and outputting at least one first to-be-decoded feature in an autoregressive manner may be specifically inputting the target frame feature into the first recurrent sub-network for mapping, outputting at least one first to-be-fine-tuned feature in the autoregressive manner, and inputting each first to-be-fine-tuned feature into the second recurrent sub-network for fine-tuning, to output the at least one first to-be-decoded feature. The first to-be-fine-tuned feature is an intermediate hidden-state feature generated by the first recurrent sub-network, is an initial encoding result by a model for the inputted target frame feature, but does not completely adapt to a downstream task (such as action generation or reconstruction). These features usually include high-layer semantic information (such as a dynamic mode or a time sequence dependency relationship of an action), but may lack details or precision required by the downstream task, and need to be further fine-tuned. The fine tuning refers to tuning a value of a feature element in the first to-be-fine-tuned feature, so that the first to-be-fine-tuned feature is more refined. The first recurrent sub-network, the second recurrent sub-network, and the second recurrent neural network are recurrent neural networks of the same type. The first recurrent sub-network is configured to perform coarse-grained calculation. The coarse-grained calculation refers to performing simplified feature extraction processing, to reduce model complexity and calculation costs, and to keep model performance to an extent. The second recurrent sub-network is configured to perform fine-grained calculation. The fine-grained calculation refers to performing refined feature extraction processing, thereby effectively improving feature accuracy.

Specifically, the target frame feature inputted into the second recurrent neural network sequentially goes through the first recurrent sub-network and the second recurrent sub-network. The first animation frame and the action type feature are concatenated to obtain the target frame feature. The target frame feature is inputted into the first recurrent sub-network for feature mapping, and the first to-be-fine-tuned feature corresponding to the first animation frame is outputted. The first to-be-fine-tuned feature corresponding to the first animation frame is inputted into the second recurrent sub-network for feature mapping again. The first to-be-fine-tuned feature corresponding to the first animation frame is fine-tuned through second feature mapping, and a first to-be-decoded feature corresponding to the first to-be-fine-tuned feature is outputted. When a feature inputted into the second recurrent neural network includes the target frame feature corresponding to the first animation frame and at least one target intermediate frame feature corresponding to the at least one intermediate animation frame, the target frame feature and the target intermediate frame feature are sequentially inputted into the first recurrent sub-network in chronological order for feature mapping, and the first to-be-fine-tuned feature corresponding to the first animation frame and a first to-be-fine-tuned feature corresponding to the intermediate animation frame are outputted in the autoregressive manner. Next, each first to-be-fine-tuned feature is inputted into the second recurrent sub-network for feature mapping again. The extracted first to-be-fine-tuned feature is fine-tuned through second feature mapping, and a first to-be-decoded feature corresponding to each first to-be-fine-tuned feature is outputted. The first animation frame and each intermediate animation frame each have a corresponding first to-be-fine-tuned feature, that is, a quantity of first to-be-fine-tuned features is consistent with a sum of a quantity of first animation frames and a quantity of at least one intermediate animation frame. The second recurrent neural network is divided into the first recurrent sub-network and the second recurrent sub-network, so that the first recurrent sub-network can learn an approximate action and posture of a first object based on a coarse-grained feature, and the second recurrent sub-network can fine-tune and improve an action and a posture of the first object at a fine granularity based on the coarse-grained feature, thereby improving coherence and naturalness between frames, and further optimizing detailed effects such as jitter and sliding, to generate a high-quality intermediate animation frame.

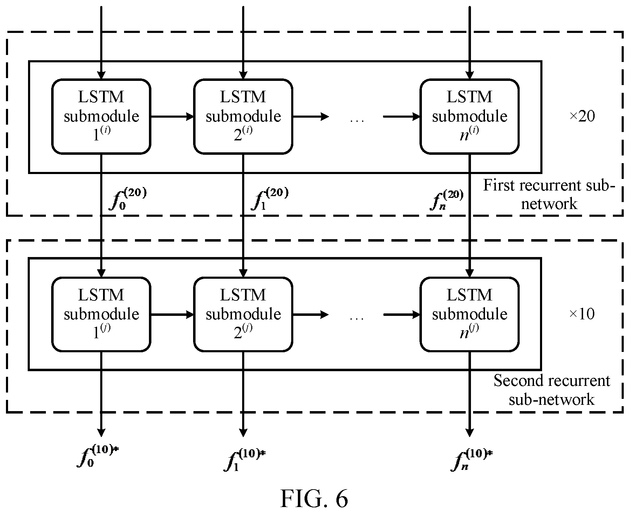

FIG. 6 is a schematic diagram of a second recurrent neural network according to some embodiments of the present disclosure. The second recurrent neural network is an LSTM-based recurrent neural network. An LSTM layer includes n LSTM submodules, a quantity of LSTM submodules is adjusted based on a sum of a quantity of first animation frames and a quantity of generated intermediate animation frames. The LSTM submodule is formed based on a mechanism such as a forget gate, an input gate, and an output gate, and is an existing technology. Details are not described herein again. The first recurrent sub-network includes 20 LSTM processing layers, and the second recurrent sub-network includes 10 LSTM processing layers. The first recurrent sub-network and the second recurrent sub-network each may alternatively have another quantity of processing layers. A quantity of processing layers in the first recurrent sub-network and a quantity of processing layers in the second recurrent sub-network are not limited in the embodiments of the present disclosure. A frame feature *f*₀ corresponding to a first animation frame, a frame feature *f*₀ corresponding to a second animation frame, and frame features *f*₁ corresponding to the generated intermediate animation frames or blank animation frames for which no intermediate animation frames are generated are sequentially inputted into each LSTM submodule in the first recurrent sub-network in chronological order. For example, the frame feature *f*₀ is inputted into an LSTM submodule 1^{(*i*)} in the first recurrent sub-network, and the frame feature *f*₁ is inputted into an LSTM submodule 2^{(*i*)} of the first recurrent sub-network. A value range of *i* is [1, 20]. After each frame feature goes through the 20 LSTM processing layers, a first to-be-fine-tuned feature corresponding to each frame feature outputted by the first recurrent sub-network is obtained. For example, the frame feature *f*₀ is inputted into the first recurrent sub-network, a first to-be-fine-tuned feature ${f}_{0}^{\left(20\right)}$ is outputted, the frame feature *f*₁ is inputted into the first recurrent sub-network, and a first to-be-fine-tuned feature ${f}_{1}^{\left(20\right)}$ is outputted. A corner mark (20) at an upper right corner indicates that the feature is outputted after going through the 20 LSTM processing layers. Then, the first to-be-fine-tuned features are sequentially inputted into the LSTM submodules in the second recurrent sub-network in chronological order. For example, the first to-be-fine-tuned feature ${f}_{0}^{\left(20\right)}$ is inputted into an LSTM submodule 1^{(*j*)} of the second recurrent sub-network. The first to-be-fine-tuned feature ${f}_{1}^{\left(20\right)}$ is inputted into an LSTM submodule 2^{(*j*)} of the second recurrent sub-network. A value range of *j* is [1, 10]. After each of the first to-be-fine-tuned features goes through the 10 LSTM processing layers, a first to-be-decoded feature corresponding to each of the first to-be-fine-tuned features outputted by the second recurrent sub-network is obtained. For example, the first to-be-fine-tuned feature ${f}_{0}^{\left(20\right)}$ is inputted into the second recurrent sub-network, and a first to-be-decoded feature ${f}_{0}^{\left(10\right) ∗}$ is outputted. The first to-be-fine-tuned feature ${f}_{1}^{\left(20\right)}$ is inputted into the second recurrent sub-network, and a first to-be-decoded feature ${f}_{1}^{\left(10\right) ∗}$ is outputted.

In some embodiments, the first recurrent sub-network includes a plurality of sequentially cascaded processing layers, and output of two adjacent processing layers are connected to each other. A process of inputting the target frame feature into the first recurrent sub-network for mapping, and outputting the at least one first to-be-fine-tuned feature in an autoregressive manner may specifically be obtaining, for a first round of autoregression, a hidden state corresponding to each of the processing layers, inputting the target frame feature and the hidden state corresponding to a first processing layer in the plurality of processing layers into the first processing layer for mapping, and inputting output of the first processing layer and the hidden state corresponding to a next processing layer into the next processing layer for mapping, until output of a last processing layer is obtained; and obtaining, for another round of autoregression, the hidden state corresponding to each of the processing layers, inputting the output of the last processing layer in the previous round and the hidden state corresponding to the first processing layer into the first processing layer for mapping, inputting the output of the first processing layer and the hidden state corresponding to the next processing layer into the next processing layer for mapping, until the output of the last processing layer is obtained, and using the output of the last processing layer in each round as the first to-be-fine-tuned feature.

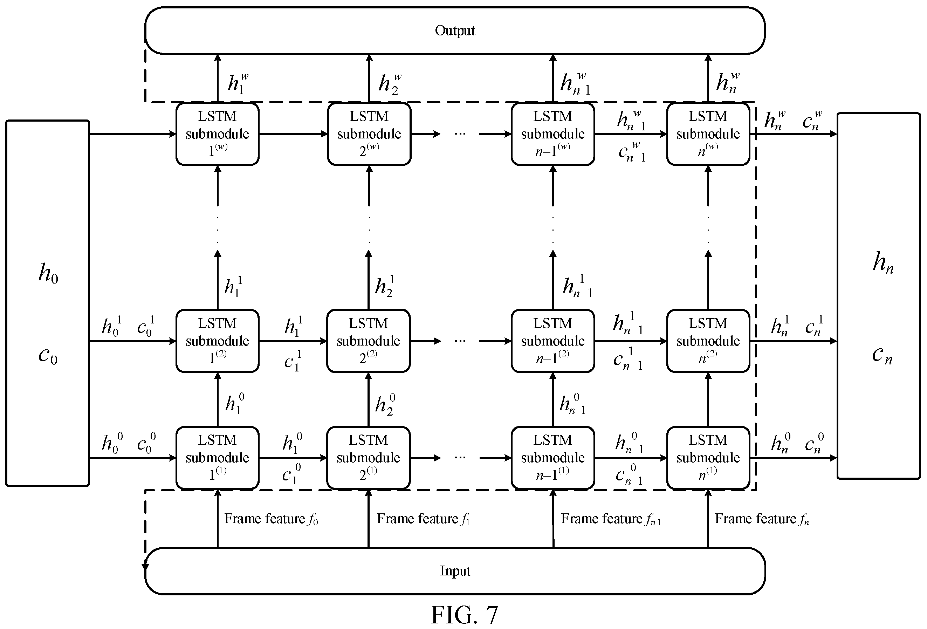

FIG. 7 is a schematic diagram of a network structure of the first recurrent sub-network according to some embodiments of the present disclosure. A dashed-line box indicates an LSTM processing layer in the first recurrent sub-network, including n LSTM submodules. A frame feature *f*₀ represents a frame feature obtained after the first frame feature corresponding to the first animation frame and an action type feature are concatenated. A frame feature *fₙ* represents a frame feature obtained after a frame feature (that is, a frame feature generated by encoding the second posture data of the first object in the second animation frame) corresponding to the second animation frame and the action type feature are concatenated. Similarly, other frame features *f*₁, ..., and *f*_{*n-*1} are frame features obtained after frame features (that is, a frame feature generated by encoding the third posture data of the first object in the intermediate animation frame) corresponding to the intermediate animation frames and the action type feature are concatenated. The hidden state refers to output of the processing layer in each time step, carries information about the time step, and is transferred to a next time step. For the first round of autoregression, hidden states ${h}_{0}^{\left(0\right)}$ and ${c}_{0}^{\left(0\right)}$ corresponding to a first LSTM processing layer are obtained, and the frame feature *f*₀ and the hidden states ${h}_{0}^{\left(0\right)}$ and ${c}_{0}^{\left(0\right)}$ are inputted into an LSTM submodule 1⁽¹⁾ of the first LSTM processing layer, to obtain hidden states ${h}_{1}^{\left(0\right)}$ and ${c}_{1}^{\left(0\right)}$. For the first LSTM processing layer (a horizontal data stream), the hidden states ${h}_{1}^{\left(0\right)}$ and ${c}_{1}^{\left(0\right)}$ sequentially go through a plurality of LSTM submodules, to obtain hidden states ${h}_{n}^{\left(0\right)}$ and ${c}_{n}^{\left(0\right)}$ of the first LSTM processing layer. For a second LSTM processing layer (a longitudinal data stream), the hidden state ${h}_{1}^{\left(0\right)}$ outputted by the LSTM submodule 1⁽¹⁾ and hidden states ${h}_{0}^{\left(1\right)}$ and ${c}_{0}^{\left(1\right)}$ corresponding to the second LSTM processing layer are inputted into an LSTM submodule 1⁽²⁾ of the second LSTM processing layer, to obtain hidden states ${h}_{1}^{\left(1\right)}$ and ${c}_{1}^{\left(1\right)}$*.* For the second LSTM processing layer, the hidden states ${h}_{1}^{\left(1\right)}$ and ${c}_{1}^{\left(1\right)}$ sequentially go through a plurality of LSTM submodules, to obtain the hidden states ${h}_{n}^{\left(1\right)}$ and ${c}_{n}^{\left(1\right)}$ of the second LSTM processing layer. Then, the hidden state ${h}_{1}^{\left(1\right)}$ is inputted into a third LSTM processing layer, and autoregression is performed according to the foregoing operations, to obtain a hidden state *f*₀ that is corresponding to the frame feature *f*₀ and that is outputted in the first round. A first to-be-fine-tuned feature ${f}_{0}^{\left(1\right)}$ is determined based on the hidden state ${h}_{1}^{\left(w\right)}$, and a first intermediate animation frame is obtained based on the first to-be-fine-tuned feature ${f}_{0}^{\left(1\right)}$.

Further, for the second round of autoregression, the first to-be-fine-tuned feature ${f}_{0}^{\left(1\right)}$ and the hidden states ${h}_{0}^{\left(0\right)}$ and ${c}_{0}^{\left(0\right)}$ are inputted into the LSTM submodule 1⁽¹⁾ of the first LSTM processing layer, to obtain the hidden states ${h}_{1}^{\left(0\right)}$ and ${c}_{1}^{\left(0\right)}$). For the first LSTM processing layer, the frame feature obtained by concatenating the hidden states ${h}_{1}^{\left(0\right)}$ and ${c}_{1}^{\left(0\right)}$, a frame feature corresponding to the first intermediate animation frame, and the action type feature is inputted into an LSTM submodule 2⁽¹⁾, to obtain hidden states ${h}_{2}^{\left(0\right)}$ and ${c}_{2}^{\left(0\right)}$. The hidden states ${h}_{2}^{\left(0\right)}$ and ${c}_{2}^{\left(0\right)}$ sequentially go through a plurality of LSTM submodules, to obtain the hidden states ${h}_{n}^{\left(0\right)}$ and ${c}_{n}^{\left(0\right)}$ of the first LSTM processing layer. Then, the hidden state ${h}_{1}^{\left(0\right)}$ outputted by the LSTM submodule 1⁽¹⁾ and the hidden states ${h}_{0}^{\left(1\right)}$ and ${c}_{0}^{\left(1\right)}$ corresponding to the second LSTM processing layer are inputted into the LSTM submodule 1⁽²⁾ of the second LSTM processing layer, to obtain the hidden states ${h}_{1}^{\left(1\right)}$ and ${c}_{1}^{\left(1\right)}$. For the second LSTM processing layer, the hidden states ${h}_{1}^{\left(1\right)}$ and ${c}_{1}^{\left(1\right)}$ and the hidden state ${h}_{2}^{\left(0\right)}$ outputted by the LSTM submodule 2⁽¹⁾ are inputted into an LSTM submodule 2⁽²⁾ of the second LSTM processing layer, to obtain hidden states ${h}_{2}^{\left(1\right)}$ and ${c}_{2}^{\left(1\right)}$. The hidden states ${h}_{2}^{\left(1\right)}$ and ${c}_{2}^{\left(1\right)}$ sequentially go through a plurality of LSTM submodules, to obtain the hidden states ${h}_{n}^{\left(1\right)}$ and ${c}_{n}^{\left(1\right)}$ of the second LSTM processing layer. Then, autoregression is separately performed on the hidden states ${h}_{1}^{\left(1\right)}$ and ${h}_{2}^{\left(1\right)}$, to separately obtain the hidden states ${h}_{1}^{\left(w\right)}$ and ${h}_{2}^{\left(w\right)}$ that are outputted in the second round. First to-be-fine-tuned features ${f}_{0}^{\left(2\right)}$ and ${f}_{1}^{\left(2\right)}$ are separately determined based on the hidden states ${h}_{1}^{\left(w\right)}$ and ${h}_{2}^{\left(w\right)}$*.* A second intermediate animation frame is obtained based on the first to-be-fine-tuned features ${f}_{0}^{\left(2\right)}$ and ${f}_{1}^{\left(2\right)}$*.* A plurality of rounds of autoregression are performed according to the foregoing operations, to obtain hidden states ${h}_{1}^{\left(w\right)} , {h}_{2}^{\left(w\right)} , … , {h}_{n - 1}^{\left(w\right)}$*,* and ${h}_{n}^{\left(w\right)}$ outputted by the last LSTM processing layer in each round. The first to-be-fine-tuned feature outputted in each round is determined based on the hidden state outputted by the last LSTM processing layer in each round.

Disposing a plurality of cascaded processing layers can effectively improve a feature representation capability of the first recurrent sub-network, so that the first to-be-fine-tuned feature is more accurate.

Further, to promote information exchange between the LSTM processing layers and reduce a gradient vanishing problem that may occur during training of the first recurrent sub-network, output of two adjacent layers are directly connected through a skip connection. For example, the hidden state ${h}_{1}^{\left(0\right)}$ outputted by the LSTM submodule 1⁽¹⁾ may be directly connected to the hidden state ${h}_{1}^{\left(1\right)}$ outputted by the LSTM submodule 1⁽²⁾.

The frame features inputted into the first recurrent sub-network are frame features of all animation frames in an initial animation sequence, including frame features corresponding to the first animation frame, the second animation frame, and the blank animation frame. In the foregoing descriptions, for ease of describing an autoregressive process of circulation in the first recurrent sub-network, an autoregressive process of the frame feature corresponding to the blank animation frame and the frame feature corresponding to the second animation frame is not mentioned in the autoregressive descriptions of each round. However, during actual operation, autoregression is performed on feature frames corresponding to all animation frames in each round.

When the first recurrent sub-network is an LSTM network, the hidden state further includes a cell state *c*. In addition, the hidden state of the first LSTM processing layer in the first round may be initialized as an all-zero vector. The hidden state of the first LSTM processing layer in another round may be obtained based on the output of the last LSTM processing layer in the previous round. Alternatively, a hidden state of a first LSTM processing layer in each round may be initialized as an all-zero vector.

In some embodiments, before the target frame feature is inputted into the second recurrent neural network for mapping, and the at least one first to-be-decoded feature is outputted in the autoregressive manner, the second recurrent neural network needs to be trained. Specifically, second sample posture data of a second sample object in a second sample animation sequence may be obtained, the first recurrent sub-network is trained based on the second sample posture data, the trained first recurrent sub-network is frozen, and the second recurrent sub-network is trained based on the second sample posture data. The second sample animation sequence may be the same as the first sample animation sequence, or may be an animation sequence whose content is similar to but different from that of the first sample animation sequence. The second sample posture data is posture data of a key sample frame in the second sample animation sequence, including posture data of a key animation frame of a start frame, a key animation frame of a tail frame, or a key animation frame located between a start frame and a tail frame.

Specifically, when an action classifier (including the first recurrent neural network and a dimension conversion network) and the second recurrent neural network are jointly trained, the second sample animation sequence is the same as the first sample animation sequence. First, the key sample frame in the second sample animation sequence is inputted into the action classifier for action classification, to obtain an action type feature, and then the second sample posture data is inputted into a first encoding network for encoding, to generate a second frame feature of the second sample posture data. After feature concatenation is performed on the action type feature and the second frame feature, the action type feature and the second frame feature are inputted into the first recurrent sub-network for feature mapping, so that the first recurrent sub-network can learn coarse-grained information of the second sample posture data, to obtain a coarse-grained first to-be-fine-tuned feature. Then, the trained first recurrent sub-network is frozen, and the coarse-grained first to-be-fine-tuned feature is inputted into the second recurrent sub-network for feature mapping again, so that the second recurrent sub-network can learn fine-grained information of the second sample posture data based on obtaining the coarse-grained first to-be-fine-tuned feature, to obtain a fine-grained first to-be-decoded feature. The action classifier and the second recurrent neural network are jointly trained, to implement feature representation sharing and fusion between the two networks, thereby obtaining richer feature representation. In addition, a joint training policy introduces more diversified challenges in a training stage by means of interaction between the two networks, thereby improving generalization capabilities of the action classifier and the second recurrent neural network, and enhancing robustness of the action classifier and the second recurrent neural network.

In some embodiments, when the action classifier and the second recurrent neural network are separately trained, the second sample animation sequence may be constructed for a feature mapping capability of the second recurrent neural network. In this case, the second sample animation sequence may be an animation sequence having the same structure as but different content from that of the first sample animation sequence. Alternatively, the second sample animation sequence may be another animation sequence. That is, the second sample animation sequence includes a key sample frame and all animation frames include posture data. That is, another animation frame besides the key sample frame is not set as a blank animation frame. Because the second recurrent neural network is separately trained, the key sample frame in the second sample animation sequence may first be inputted into the action classifier, to obtain an action type feature, or a probability distribution of action types may be randomly generated based on an action of a sample object in the second sample animation sequence, and the randomly generated probability distribution is used as an action type feature. Then, the second sample posture data is inputted into the first encoding network for encoding, to generate the second frame feature corresponding to the second sample posture data. After feature concatenation is performed on the action type feature and the second frame feature, the action type feature and the second frame feature are inputted into the first recurrent sub-network for feature mapping, so that the first recurrent sub-network can learn coarse-grained information of the second sample posture data, to obtain a coarse-grained first to-be-fine-tuned feature. Then, the trained first recurrent sub-network is frozen, and the coarse-grained first to-be-fine-tuned feature is inputted into the second recurrent sub-network for feature mapping again, so that the second recurrent sub-network can learn fine-grained information of the second sample posture data based on the coarse-grained first to-be-fine-tuned feature, to a fine-grained first to-be-decoded feature. The action classifier and the second recurrent neural network are independently trained, so that the two networks can be enabled to focus on respective learning tasks without potential interference and impact of another network, thereby reducing training complexity. Further, such an independent training policy enables the action classifier and the second recurrent neural network to be trained and optimized for specific tasks of the action classifier and the second recurrent neural network, to improve classification accuracy of the action classifier and a feature extraction capability of the second recurrent neural network, thereby improving accuracy of generating the intermediate animation frame.

In some embodiments, in a process of training the first recurrent sub-network based on the second sample posture data, specifically, the second sample posture data of the start frame in the second sample animation sequence may be encoded, to obtain the second frame feature. A second action type label of the second sample object is obtained. The second frame feature and the second action type label are concatenated into a sample frame feature. The sample frame feature is inputted into the first recurrent sub-network in the second recurrent neural network for mapping. At least one second to-be-fine-tuned feature is outputted in the autoregressive manner. Each second to-be-fine-tuned feature is inputted into the decoding network for decoding, to obtain at least one first predicted animation frame temporally after the start frame. A second loss is determined based on a difference between each first predicted animation frame and a corresponding animation frame in the second sample animation sequence. The first recurrent sub-network is trained based on the second loss. The second frame feature is a frame feature extracted from the start frame in the second sample animation sequence. The second to-be-fine-tuned feature is an intermediate feature obtained by performing mapping by the first recurrent sub-network based on the sample frame feature in a training process. The first predicted animation frame is a predicted animation frame obtained based on a mapping feature outputted by the first recurrent sub-network in the training process.

Specifically, the second sample posture data of the second sample object in the start frame in the second sample animation sequence is inputted into the first encoding network for encoding, to obtain a second frame feature of the start frame. The second action type label of the second sample object is obtained. The second action type label is a label pre-configured based on an action of the second sample object. One second sample object corresponds to one second action type label. Next, the second frame feature and the second action type label are concatenated, to obtain the sample frame feature. The sample frame feature is inputted into the first recurrent sub-network in the second recurrent neural network for feature mapping. A second to-be-fine-tuned feature corresponding to the start frame is outputted. The second to-be-fine-tuned feature corresponding to the start frame is inputted into the decoding network for decoding, to obtain the first predicted animation frame that is temporally after the start frame and that is adjacent to the start frame. Then second sample posture data of the first predicted animation frame obtained based on the start frame is inputted into the first encoding network for encoding, to obtain a second frame feature of the first predicted animation frame obtained based on the start frame. The second frame feature of the first predicted animation frame obtained based on the start frame and the action type feature are concatenated into a sample frame feature. The sample frame feature is inputted into the first recurrent sub-network of the second recurrent neural network for feature mapping. A second to-be-fine-tuned feature corresponding to the first predicted animation frame obtained based on the start frame is outputted. The second to-be-fine-tuned feature corresponding to the first predicted animation frame obtained based on the start frame is inputted into the decoding network for decoding, to obtain a second first predicted animation frame temporally after the start frame. Circulation is performed for a plurality of times based on the foregoing operations, to obtain at least one first predicted animation frame temporally after the start frame.

Next, an animation frame that is in the second sample animation sequence and that corresponds to a time point corresponding to the first predicted animation frame is obtained. A second loss is determined based on a difference between each first predicted animation frame and the corresponding animation frame in the second sample animation sequence. The second loss may be calculated based on a loss function *L*1 or a loss function *L*2. A training direction and an optimization direction of the first recurrent sub-network are instructed based on the second loss. The loss function *L*1 has relatively low sensitivity to an abnormal value (a pixel having a relatively large difference, which may alternatively be considered as an extreme value). Therefore, the loss function *L*1 is configured for measuring a difference between the first predicted animation frame and the animation frame corresponding to the time point of the first predicted animation frame, so that impact of an abnormal value on the difference between the first predicted animation frame and the animation frame corresponding to the time point of the first predicted animation frame can be reduced, and stable gradient information can be provided, thereby facilitating improving stability during training of the first recurrent sub-network. In addition, the loss function *L*2 has global derivability, so that the first recurrent sub-network can quickly find, during optimization by using a gradient-based optimization algorithm, a parameter combination that minimizes an L1 loss. In addition, the loss function *L*2 imposes a greater penalty on the abnormal value, so that the first recurrent sub-network can pay more attention to a pixel with a relatively large error during training, thereby enabling the first recurrent sub-network to perform targeted optimization, and effectively improving training efficiency and quality of the first recurrent sub-network. In an actual application, the first recurrent sub-network may be trained by selecting a loss function based on a current actual task requirement, and the loss function includes but is not limited to: the loss *L*1 and the loss *L*2. This is not specifically limited in this application.

In some embodiments, in a process of training the second recurrent sub-network based on the second sample posture data, specifically, the second sample posture data of the start frame in the second sample animation sequence may be encoded, to obtain the second frame feature. The second action type label of the second sample object is obtained. The second frame feature and the second action type label are concatenated into the sample frame feature. The sample frame feature is inputted into the first recurrent sub-network in the trained second recurrent neural network for mapping. At least one third to-be-fine-tuned feature is outputted in the autoregressive manner. Each third to-be-fine-tuned feature is inputted into the second recurrent sub-network for fine-tuning. At least one to-be-decoded feature is outputted. The third to-be-fine-tuned feature is an intermediate feature obtained by performing mapping by the trained first recurrent sub-network based on the sample frame feature. The second to-be-decoded feature is an intermediate feature obtained by performing mapping by the second recurrent sub-network based on the third be-fine-tuned feature in a training process.

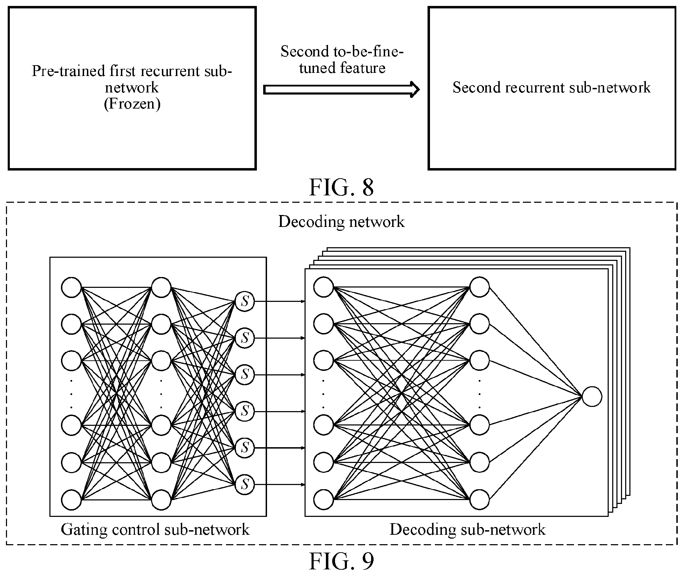

FIG. 8 is a schematic diagram of training a second recurrent sub-network according to some embodiments of the present disclosure. When the second recurrent sub-network is trained, a trained first recurrent sub-network is frozen. The frozen first recurrent sub-network still performs feature mapping, but a network parameter of the first recurrent sub-network does not change with a training process of the second recurrent sub-network. That is, the network parameter of the first recurrent sub-network is frozen. First, second sample posture data of a second sample object in a start frame in a second sample animation sequence is inputted into a first encoding network for encoding, to obtain a second frame feature of the start frame. A second action type label of the second sample object is obtained. Next, the second frame feature and the second action type label are concatenated, to obtain a sample frame feature. The sample frame feature is inputted into the trained frozen first recurrent sub-network for feature mapping, to output at least one coarse-grained third to-be-fine-tuned feature in an autoregressive manner. Then, each coarse-grained third to-be-fine-tuned feature is inputted into a position corresponding to the second recurrent sub-network for fine-tuning, so that the second recurrent sub-network can learn fine-grained information of the second sample posture data, and output at least one fine-grained second to-be-decoded feature.

Next, each second to-be-decoded feature is inputted into a decoding network for decoding. At least one second predicted animation frame temporally after the start frame is outputted. A third loss is determined based on a difference between each second predicted animation frame and a corresponding animation frame in the second sample animation sequence. The second recurrent sub-network is trained based on the third loss. Specifically, an animation frame that is in the second sample animation sequence and that corresponds to a time point corresponding to the second predicted animation frame is obtained. The third loss is determined based on the difference between each second predicted animation frame and the corresponding animation frame in the second sample animation sequence. The third loss may be calculated based on a loss function *L*1 or a loss function *L*2. A training direction and an optimization direction of the second recurrent sub-network are instructed based on the third loss. In an actual application, the second recurrent sub-network may be trained by selecting a loss function based on a current actual task requirement, and the loss function includes but is not limited to: the loss *L*1 and the loss *L*2. This is not specifically limited in this application.

The first recurrent sub-network is configured to extract a coarse-grained feature of posture data. The coarse-grained feature includes a macro feature such as an approximate contour or a key action mode of an object posture. The second recurrent sub-network is configured to extract a fine-grained feature of the posture data. The fine-grained feature includes a small variation or a subtle change such as a local detail of the posture. Therefore, the two networks are combined, so that the posture data can be accurately mapped, to obtain richer and more comprehensive feature representation. In this case, the decoding network can comprehensively and deeply analyze and understand the posture data based on the feature representation, thereby improving accuracy and fluency of generating an intermediate animation frame.

In some embodiments, the decoding network includes a gating control sub-network and a plurality of decoding sub-networks. Each first to-be-decoded feature is inputted into the decoding network for decoding. In a process of obtaining at least one intermediate animation frame between a first animation frame and a second animation frame, specifically, for each first to-be-decoded feature, the first to-be-decoded feature may be inputted into the gating control sub-network for weight prediction, and a target sub-network corresponding to the first to-be-decoded feature is determined from the plurality of decoding sub-networks based on a predicted network weight; and each first to-be-decoded feature is inputted into the target sub-network corresponding to the first to-be-decoded feature for decoding, to obtain the at least one intermediate animation frame between the first animation frame and the second animation frame.

Specifically, the target frame feature is inputted into a second recurrent neural network for mapping, to obtain at least one first to-be-decoded feature. For each first to-be-decoded feature, the first to-be-decoded feature is inputted into the gating control sub-network for weight prediction. The weight prediction may be performing regression processing based on the first to-be-decoded feature, to obtain a weight distribution corresponding to the first to-be-decoded feature. A network weight of each decoding sub-network is determined based on the weight distribution, and then at least one decoding sub-network is selected from the plurality of decoding sub-networks based on the network weight for combination, to obtain the target sub-network corresponding to the first to-be-decoded feature. Next, each first to-be-decoded feature is inputted into the target sub-network corresponding to the first to-be-decoded feature, to obtain a target feature of the target sub-network. Decoding is performed based on the target feature, to obtain the at least one intermediate animation frame between the first animation frame and the second animation frame. The weight distribution is introduced, so that contributions of different decoding sub-networks in the process of generating the intermediate animation frame can be adjusted based on the weight distribution, so that the decoding network can adapt to different input data and control conditions, thereby improving a generalization capability of the decoding network. In addition, a method of combining decoding sub-networks through the weight distribution can further promote information sharing and fusion between different decoding sub-networks, to obtain richer feature representation, thereby further improving quality of generation of the intermediate animation frame by the decoding network.

FIG. 9 is a schematic diagram of a decoding network according to some embodiments of the present disclosure. The decoding network includes a gating control sub-network and a plurality of decoding sub-networks. The gating sub-network includes two feedforward layers and one output layer. The two feedforward layers separately include a plurality of neurons, and the output layer includes a softmax function. After a first to-be-decoded feature is inputted into the gating control sub-network, the first to-be-decoded feature goes through the two feedforward layers and the softmax output layer, to obtain a weight distribution corresponding to the first to-be-decoded feature, and output of the decoding sub-networks is combined based on the weight distribution. One decoding sub-network includes three feedforward layers. After the first to-be-decoded feature goes through the three feedforward layers of the decoding sub-network, a target sub-feature corresponding to the decoding sub-network is obtained. Target sub-features that correspond to the target sub-network and that are obtained based on weight distribution combination are combined, to obtain a combined target feature. Decoding is performed based on the target feature, to obtain an intermediate animation frame.

In some embodiments, before each first to-be-decoded feature is inputted into the decoding network for decoding, the decoding network needs to be trained. Specifically, third posture data of a second object in a third animation frame and fourth posture data of the second object in a fourth animation frame adjacent to the third animation frame may be obtained. The third posture data and the fourth posture data are concatenated and encoded, to obtain an encoded feature. The encoded feature and the third posture data are inputted into the decoding network for decoding, to obtain a third predicted animation frame. A fourth loss is determined based on a difference between the third predicted animation frame and the fourth animation frame. The decoding network is trained based on the fourth loss. The third animation frame and the fourth animation frame may be obtained from the first sample animation sequence, the second sample animation sequence, or another animation sequence, and the fourth animation frame is an animation frame temporally after the third animation frame. The encoded feature is a feature obtained after a second encoding network, and like the first frame feature, may be a feature directly outputted through a neural network, or may be a feature obtained after further compression operations. The second encoding network is configured to perform joint training with the decoding network, to generate an encoded feature for the decoding network. The third posture data and the fourth posture data are data similar to the first posture data of the first object in the first animation frame and the second posture data of the first object in the second animation frame, and include position coordinates and a rotation parameter of a joint point.

Specifically, when the decoding network is trained, the corresponding second encoding network needs to be configured for the decoding network. The encoded feature outputted by the second encoding network is decoded, and a control condition is introduced in a decoding process. The control condition is configured for instructing a direction in which the decoding network generates data, and may be data in any modality and of any type, such as image data and text data (a type label and an attribute description). First, the third posture data of the second object in the third animation frame and the fourth posture data of the second object in the fourth animation frame are obtained, and the third posture data and the fourth posture data are concatenated and then inputted into the second encoding network for encoding, to obtain the encoded feature. Then, the third posture data is considered as a control condition. The encoded feature and the third posture data are inputted into the decoding network. The gating control sub-network performs learning based on the third posture data and the encoded feature, to output a weight distribution, and instructs a combination of the decoding sub-networks based on the weight distribution, to obtain the target sub-network. Then, the encoded feature is inputted into the target sub-network. The target sub-network decodes the encoded feature based on the third posture data, to obtain the third predicted animation frame. The control condition is introduced, so that the decoding network can generate, based on the control condition, posture data meeting a particular condition, so that an intermediate animation frame reconstructed by the decoding network is flexible and controllable.

Next, in a process of determining the fourth loss based on the difference between the third predicted animation frame and the fourth animation frame, a difference between sample posture data of the third predicted animation frame and the fourth posture data of the fourth animation frame is calculated based on a loss function L2, to obtain a posture reconstruction loss. When the encoded feature is a pixel feature, the fourth loss may be calculated based on the posture reconstruction loss. When the encoded feature is a hidden variable, a distribution of the encoded feature needs to be constrained to a standard Gaussian distribution. A difference between the distribution of the encoded feature and the standard Gaussian distribution is calculated by using a KL divergence loss, to obtain a distribution loss. In this case, the fourth loss may be calculated based on the posture reconstruction loss and the distribution loss. In an actual training process, when the difference between the posture data corresponding to the third predicted animation frame and the fourth posture data corresponding to the fourth animation frame is calculated, it may alternatively be considered that a difference between joint point position coordinates or a difference between joint point rotation angles and a difference between rotation directions is separately calculated. A position loss is calculated based on the difference between the joint point position coordinates, and a rotation loss is calculated based on the difference between the joint point rotation angles and the difference between the rotation directions. In addition, to sufficiently train the decoding network, a bone length of a bone between joints may further be considered, a difference between bone lengths is calculated, a bone length loss is calculated based on the difference between the bone lengths, and a fourth loss is obtained based on the posture reconstruction loss, the distribution loss, the position loss, the rotation loss, and the bone length loss. Composition of the fourth loss is not specifically limited in this application. The losses in a plurality of aspects are considered, so that the decoding network can learn more accurate feature representation based on the losses, thereby facilitating generating a high-quality and accurate intermediate animation frame.

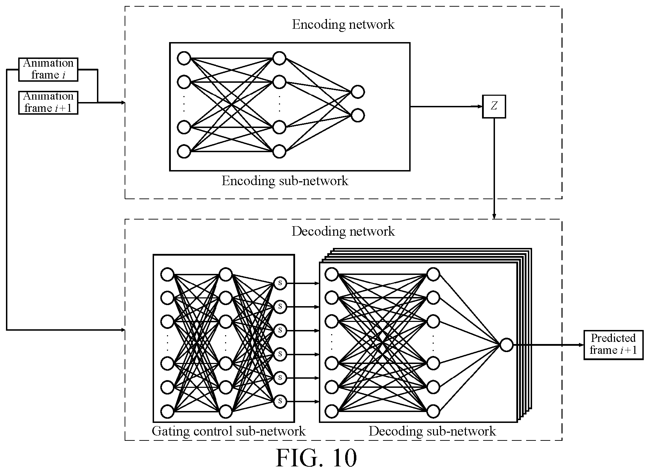

FIG. 10 is a schematic diagram of training a decoding network according to some embodiments of the present disclosure. Posture data corresponding to adjacent animation frame *i* and animation frame *i*+1 (that is, all key animation frames, where *i* is a positive integer) is concatenated, and then is inputted into an encoding network. The encoding network includes at least one encoding sub-network. The encoding sub-network includes two feedforward layers and an output layer. The two feedforward layers are separately formed by a plurality of neurons. An average value *µ* and a variance σ of a compressed encoded feature Z is obtained by using the output layer, and the average value *µ* and the variance are configured for describing a distribution of the encoded feature *Z*. Then, the encoded feature *Z* and the posture data corresponding to the animation frame *i* are inputted into the decoding network for decoding, to obtain a predicted frame *i*+1. A difference between the predicted frame *i*+1 and the animation frame *i*+1 are calculated. Training of the decoding network is instructed based on an obtained loss. A high-dimension encoded feature is compressed into a low-dimension encoded feature (a hidden variable), so that a training time and overall training complexity of the decoding network can be reduced, thereby improving training efficiency of the decoding network. Second, the hidden variable usually includes key information of posture data, so that the decoding network can focus on and learn representation of the key information to reconstruct original data, thereby effectively improving accuracy and authenticity of generating an intermediate animation frame.

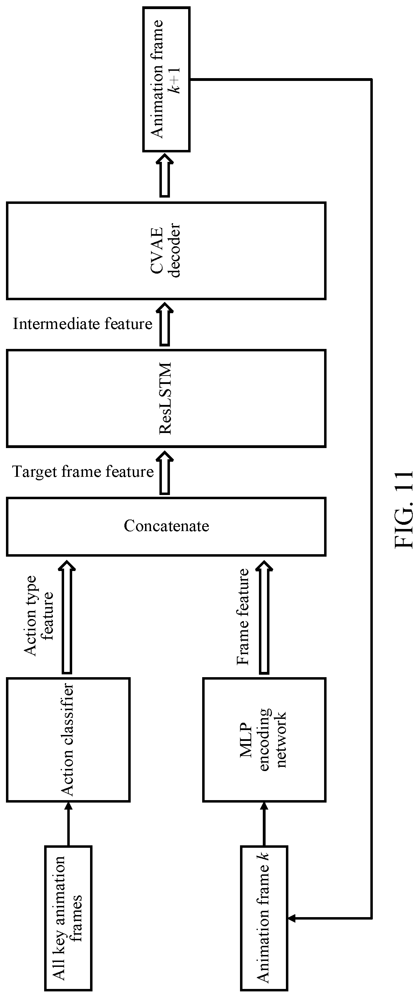

FIG. 11 is an overall schematic flowchart of an animation frame generation method according to some embodiments of the present disclosure. The following completely describes the principle of the animation frame generation method in this embodiment of the present disclosure from the whole.

Before an intermediate animation frame is generated, a generation model needs to be trained. The generation model includes an action classifier, an MLP encoder, a second recurrent neural network, and a CVAE decoder. First, an animation sequence sample is obtained, and the CVAE decoder is trained based on the animation sequence sample. In a process of training the CVAE decoder, a corresponding CVAE encoder is configured for the CVAE decoder, and posture data of a first object in adjacent animation frame *k* and animation frame *k*+1 in the inputted animation sequence sample are compressed and encoded by using the CVAE encoder, to obtain a hidden variable. The posture data of the animation frame *k* is used as a control condition, and the CVAE decoder performs decoding based on the hidden variable and the control condition, to obtain a predicted animation frame *k*+1 through reconstruction. Next, joint training is performed on the action classifier, the MLP encoder, and the second recurrent neural network. Posture data of a key sample frame in the animation sequence sample is inputted into the action classifier for action classification, to obtain an action type feature. Then, the posture data of the animation frame *k* is inputted into the MLP encoder for encoding, to obtain a first frame feature corresponding to the animation frame k. The action type feature and the first frame feature are concatenated and then inputted into the second recurrent neural network for feature mapping, to obtain a first to-be-decoded feature. Then, the first to-be-decoded feature is inputted into the trained CVAE decoder for decoding, to obtain the predicted animation frame *k*+1. A loss is calculated based on a difference between the animation frame *k*+1 in the animation sequence sample and the predicted animation frame *k*+1. Training of the action classifier and the second recurrent neural network is instructed based on the loss.

During training of the action classifier, all key sample frames are inputted into the action classifier. Similar to a key animation frame, the key sample frame is configured for indicating a key action node of a sample object in a motion change process, and defines posture data of the sample object at the key action node. The key sample frame first goes through an LSTM used as a first recurrent neural network. An action feature vector is extracted from the LSTM. Then, the extracted action feature vector is inputted into an MLP. The MLP converts a dimension of the action feature vector into a feature dimension consistent with a quantity of action types. Then, the action feature vector whose feature dimension is converted is inputted into an output layer formed by a softmax function, to obtain a probability value of each of the action type. A probability distribution includes probability values of the action types, and the probability distribution is used as the action type feature. Then, a prediction label is obtained based on the action type feature, a sample label corresponding to the key sample frame in the animation sequence sample is obtained, a loss is determined based on a difference between the predicted label and the sample label, and training of the action classifier is instructed based on the loss.

In a process of training the second recurrent neural network, a two-stage training method is used. The action type feature and the first frame feature are concatenated and then inputted into a first recurrent sub-network including 20 layers of LSTMs, to learn an approximate action and posture of a first object in an animation frame at a relatively coarse granularity. A hidden variable of a blank animation frame is outputted frame by frame in an autoregressive manner. The hidden variable is inputted into the CVAE decoder, to obtain posture data of the first object in the blank animation frame. Then, output of the first recurrent sub-network is inputted into a second recurrent sub-network including 10 layers of LSTMs, to fine-tune and improve an action and a posture of the first object in the animation frame at a fine granularity, and a complete animation sequence after the fine-tuning is generated in the autoregressive manner, thereby optimizing detailed problems such as jitter and a sliding step.

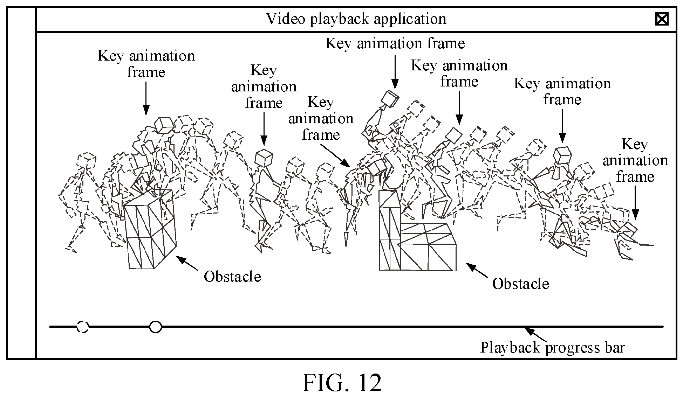

After the model generation training is completed, an animation sequence from which an intermediate animation frame needs to be generated is obtained, all key animation frames preset in the animation sequence are inputted into the action classifier, a probability distribution that an action of the first object in the key animation frame belongs to each action type is outputted by using the softmax function, and the outputted probability distribution is used as the action type feature. Then, the posture data of the animation frame *k* in the animation sequence is inputted into the MLP encoder for encoding, to obtain a first frame feature of the animation frame *k*. The animation frame *k* is a generated intermediate animation frame, or the animation frame *k* may be a key animation frame in the animation sequence except a last frame. Then, the action type feature and the first frame feature are concatenated, to obtain a target frame feature. The target frame feature is inputted into the second recurrent neural network for feature mapping, to obtain a fine-grained intermediate feature (a hidden variable). Then, the intermediate feature is inputted into the CVAE decoder for prediction, to obtain the animation frame *k*+1. Next, the posture data of the animation frame *k+1* is inputted into an MLP encoding network for encoding, to obtain a frame feature corresponding to the animation frame *k+1*. The foregoing process is iteratively repeated in the autoregressive manner, until all intermediate animation frames are predicted, to perform supplementation to form a complete animation sequence. 12. FIG. 12 is a schematic diagram of playback of a complete animation sequence generated according to some embodiments of the present disclosure. The generated animation sequence may be played in a video playback application. FIG. 12 shows a process in which a person crosses over an obstacle. A solid-line person represents a key animation frame, and a dashed-line person represents an intermediate animation frame generated by using the animation frame generation method in the embodiments of the present disclosure.

In this embodiment of the present disclosure, first posture data of a first object in a first animation frame and second posture data of the first object in a second animation frame are obtained. An action of the first object is classified based on the first posture data and the second posture data, to obtain an action type feature, so that a specific action of the first object between the first animation frame and the second animation frame can be identified. Then the first posture data is encoded, to generate a first frame feature corresponding to the first animation frame. The first frame feature and the action type feature are concatenated into a target frame feature, so that action information of the first object is fused into basic animation information of the first animation frame. Therefore, in a process of performing decoding based on the target frame feature to obtain an intermediate animation frame between the first animation frame and the second animation frame, constraint can be performed by using the action information of the first object, thereby effectively relieving an ambiguity problem and improving accuracy of generating the intermediate animation frame.

The animation frame generation method provided in the embodiments of the present disclosure may be applied to a plurality of scenarios. For example, in a game scenario, when a user controls a virtual object to move in a game, the first animation frame and the second animation frame may be animation frames before and after the virtual object moves. In this case, the intermediate animation frame generated by using the animation frame generation method provided in the embodiments of the present disclosure can accurately refine a movement process of the virtual object, so that movement of the virtual object is controlled more smoothly and accurately in the game.

For another example, the animation frame generation method provided in the embodiments of the present disclosure may alternatively be applied to a video playback scenario. The first animation frame and the second animation frame may be animation frames in a video playback process. In this case, the intermediate animation frame generated by using the animation frame generation method provided in the embodiments of the present disclosure may accurately refine an action change process of an object presented in a video, so that the video is played back more smoothly and accurately.

In the foregoing game scenario and video playback scenario, a frame insertion switch may be disposed in a game application and the video playback application. When the frame insertion switch is enabled, the animation frame generation method provided in the embodiments of the present disclosure is automatically invoked in the game process or the video playback process, to generate the intermediate animation frame.

For another example, the animation frame generation method provided in the embodiments of the present disclosure may alternatively be applied to an animation production scenario. The first animation frame and the second animation frame may be animation frames inputted by a user. In this case, the intermediate animation frame generated by using the animation frame generation method provided in the embodiments of the present disclosure can accurately refine an action change process of an object presented in a produced animation, so that the produced animation is made more smooth and accurate.

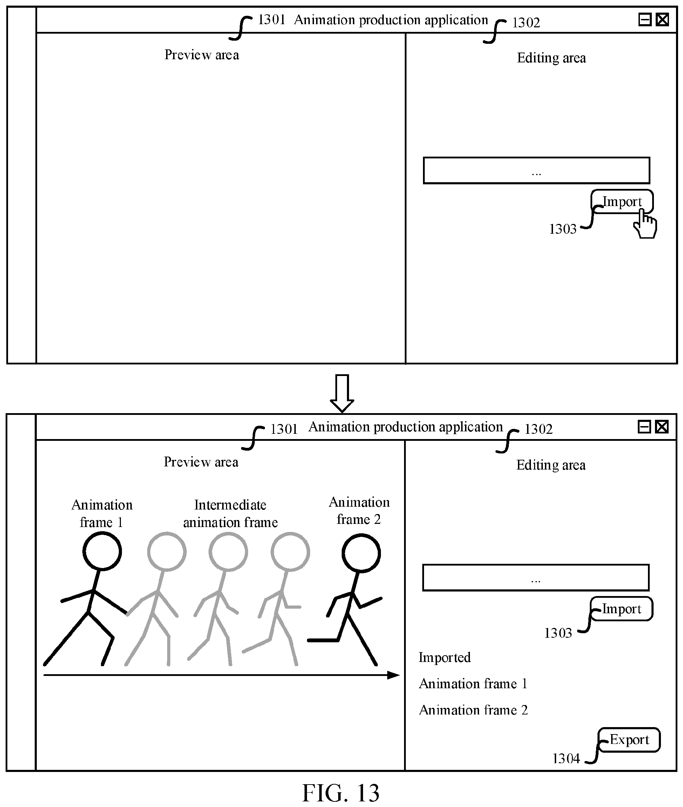

Animation production is used as an example. FIG. 13 is a schematic diagram of an operation of an animation production application according to some embodiments of the present disclosure. A preview area 1301 and an editing area 1302 may be provided on the animation production application. An import control 1303 may be disposed in the editing area 1302. A user may import at least two key animation frames by triggering the import control 1303. In FIG. 13, an example in which two key animation frames (which are respectively an animation frame 1 and an animation frame 2) are imported is used for presentation. After the animation frame 1 and the animation frame 2 are imported, identifiers that the animation frame 1 and animation frame 2 are imported are displayed in the editing area 1302, and the animation frame generation method provided in the embodiments of the present disclosure is invoked to generate an intermediate animation frame. After the intermediate animation frame is generated, an animation segment formed by the animation frame 1, the intermediate animation frame, and the animation frame 2 is displayed in the preview area 1301 for the user to preview. Finally, the entire animation segment that is generated may be exported by triggering an export control 1304 in the editing area 1302, to complete the animation production process.

Although the operations of the foregoing flowcharts is displayed sequentially according to arrows, the operations are not necessarily performed according to a sequence indicated by the arrows. Unless otherwise explicitly specified in this embodiment, execution of the operations is not strictly limited, and the operations may be performed in other sequences. Moreover, at least some of the operations in the foregoing flowcharts may include a plurality of operations or a plurality of stages. These operations or stages are not necessarily executed at the same time, but may be executed at different time. A sequence of execution of these operations or stages is not necessarily performed sequentially, but may be performed in turn or alternately with other operations or at least some of operations or stages of other operations.

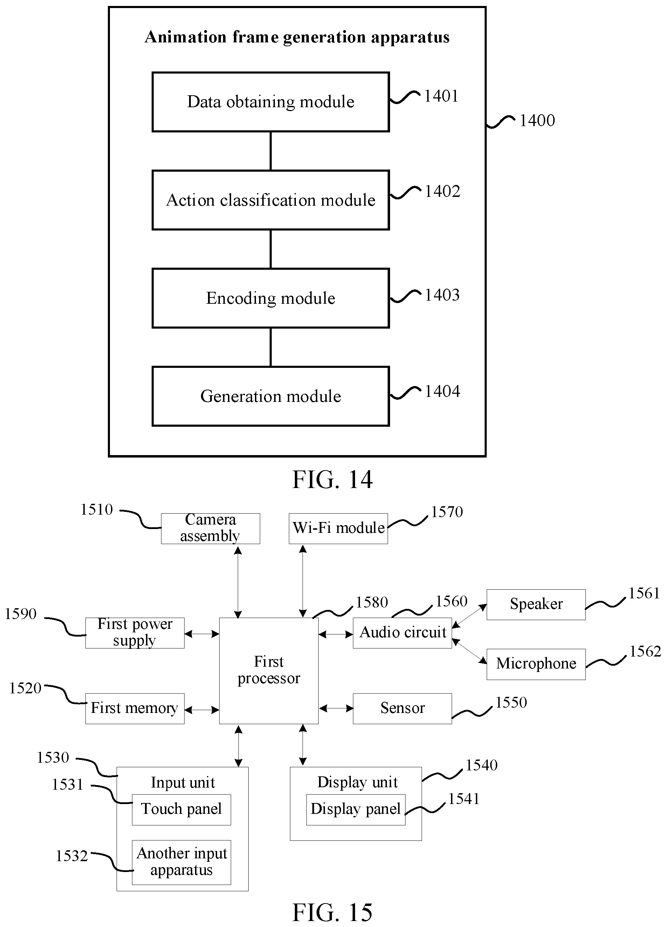

FIG. 14 is a schematic diagram of a structure of an animation frame generation apparatus according to some embodiments of the present disclosure. The animation frame generation apparatus 1400 includes:
a data obtaining module 1401, configured to obtain first posture data of a first object in a first animation frame and second posture data of the first object in a second animation frame, the second animation frame being an animation frame temporally after the first animation frame;
an action classification module 1402, configured to classify an action of the first object based on the first posture data and the second posture data by using an action classifier, to obtain an action type feature;
an encoding module 1403, configured to encode the first posture data, to generate a first frame feature corresponding to the first animation frame; and
a generation module 1404, configured to concatenate the first frame feature and the action type feature into a target frame feature, and perform decoding based on the target frame feature, to obtain at least one intermediate animation frame between the first animation frame and the second animation frame.

An electronic device that is configured to perform the foregoing animation frame generation method and that is provided in some embodiments of the present disclosure may be a terminal. FIG. 15 is a block diagram of a partial structure of a terminal according to some embodiments of the present disclosure. The terminal includes: a camera assembly 1510, a first memory 1520, an input unit 1530, a display unit 1540, a sensor 1550, an audio circuit1560, a wireless fidelity (Wi-Fi) module1570, a first processor 1580, a first power supply 1590, and the like. A person skilled in the art may understand that the terminal structure shown in FIG. 15 constitutes no limitation on the terminal, and the terminal may include more or fewer components than those shown in the figure, some components may be combined, or a different component deployment may be used.

The camera assembly 1510 may be configured to collect an image or a video. In some embodiments, the camera assembly 1510 includes a front-facing camera and a rear-facing camera. Usually, the front-facing camera is disposed on a front panel of the terminal, and the rear-facing camera is disposed on a back surface of the terminal. In some embodiments, there are at least two rear-facing cameras that are respectively any one of a main camera, a depth of field camera, a wide-angle camera, and a telephoto camera, to fuse the main camera and the depth of field camera to implement a background blurring function, or to fuse the main camera and the wide-angle camera to implement panorama photographing and a virtual reality (VR) photographing function or another fusion photographing function.

The first memory 1520 may be configured to store software programs and modules, and the first processor 1580 executes various functional applications and data processing of the terminal by running the software programs and the modules stored in the first memory 1520.

The input unit 1530 may be configured to receive inputted digit or character information, and generate key signal input related to settings and function control of the terminal. Specifically, the input unit 1530 may include a touch panel 1531 and another input apparatus 1532.

The display unit 1540 may be configured to display inputted information or provided information, and various menus of the terminal. The display unit 1540 may include a display panel 1541.

The audio circuit 1560, a speaker 1561, and a microphone 1562 may provide audio interfaces.

The first power supply 1590 may be an alternating current, a direct current, a disposable battery, or a chargeable battery.

There may be one or more sensors 1550, and the one or more sensors 1550 include, but are not limited to, an acceleration sensor, a gyro sensor, a pressure sensor, an optical sensor, and the like. Specifically,

the acceleration sensor may detect magnitude of acceleration on three coordinate axes of a coordinate system established with the terminal. For example, the acceleration sensor may be configured to detect components of gravity acceleration on the three coordinate axes. The first processor 1580 may control, based on a gravity acceleration signal collected by the acceleration sensor, the display unit 1540 to display the user interface in a landscape view or a portrait view. The acceleration sensor may further be configured to collect motion data of a game or a user.

The gyro sensor may detect a body direction and a rotation angle of the terminal, and the gyro sensor may cooperate with the acceleration sensor to collect a 3D action by a user on the terminal. The first processor 1580 may implement the following functions based on data collected by the gyro sensor: action sensing (such as changing a UI based on a tilt operation by the user), image stabilization during photographing, game control, and inertial navigation.

The pressure sensor may be disposed on a side frame of the terminal and/or a lower layer of the display unit 1540. When the pressure sensor is disposed at the side frame of the terminal, a holding signal of the user on the terminal may be detected. The first processor 1580 performs left/right hand recognition or a quick operation according to the holding signal acquired by the pressure sensor. When the pressure sensor is disposed on the low layer of the display unit 1540, the first processor 1580 controls an operable control on the UI based on a pressure operation by the user for the display unit 1540. The operable control includes at least one of a button control, a scroll-bar control, an icon control, and a menu control.

The optical sensor is configured to collect ambient light intensity. In some embodiments, the first processor 1580 may control display luminance of the display unit 1540 according to the ambient light intensity collected by the optical sensor. Specifically, display brightness of the display unit 1540 is improved when the ambient light intensity is relatively high; and display brightness of the display unit 1540 is decreased when the ambient light intensity is relatively low. In another embodiment, the first processor 1580 may further dynamically adjust a photographing parameter of the camera assembly 1510 based on the ambient light intensity collected by the optical sensor.

In this embodiment, the first processor 1580 included in the terminal may perform the animation frame generation method in the foregoing embodiments.

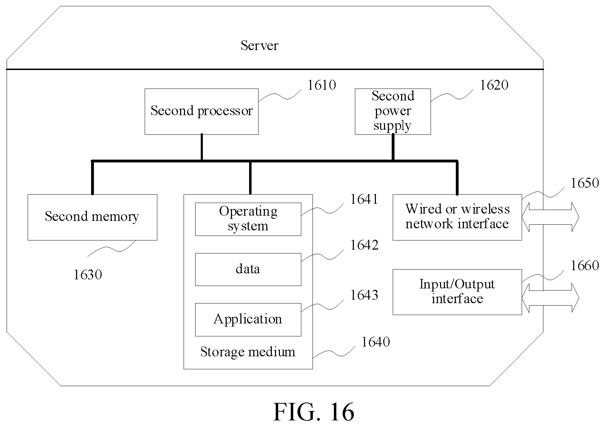

An electronic device that is configured to perform the foregoing animation frame generation method and that is provided in some embodiments of the present disclosure may alternatively be a server. FIG. 16 is a block diagram of a partial structure of a server according to some embodiments of the present disclosure. The server may vary greatly due to different configurations or performance, and may include one or more second processors 1610, a second memory 1630, and one or more storage media 1640 (for example, one or more mass storage apparatuses) having an application program 1643 or data 1642 stored therein. The second memory 1630 and the storage medium 1640 may be temporarily stored or permanently stored. A program stored in the storage medium 1640 may include one or more modules (not shown in the figure), and each of the modules may include a series of instruction operations for the server. Further, the second processor 1610 may be configured to communicate with the storage medium 1640, and execute, on the server, a series of instruction operations in the storage medium 1640.

The server may further include one or more second power supplies 1620, one or more wired or wireless network interfaces1650, one or more input/output interfaces 1660, and/or one or more operating systems1641, such as Windows ServerTM, Mac OS XTM, UnixTM, LinuxTM, or FreeBSDTM.

The second processor 1610 in the server may be configured to perform the animation frame generation method.

Some embodiments of the present disclosure further provide a computer-readable storage medium, the computer-readable storage medium being configured to store a computer program, and the computer program being configured to perform the animation frame generation method according to the foregoing embodiments.

Some embodiments of the present disclosure further provide a computer program product, the computer program product including a computer program, and the computer program being stored in a computer-readable storage medium. A processor of a computer device reads the computer program from the computer-readable storage medium and executes the computer program, to cause the computer device to implement the foregoing animation frame generation method.

In the specification of the present disclosure and the foregoing accompanying drawings, the terms "first", "second", "third", "fourth", and the like (if existing) are intended to distinguish between similar objects rather than describe a specific order or sequence. Such used data is interchangeable where appropriate, so that the embodiments of this application described can be implemented, for example, in an order other than those illustrated or described herein. Moreover, the terms "include", "contain" and any other variants mean to cover the non-exclusive inclusion, for example, a process, a method, a system, a product, or an apparatus that includes a list of operations or units is not necessarily limited to those expressly listed operations or units, but may include other operations or units not expressly listed or inherent to such a process, a method, a system, a product, or an apparatus.

In the present disclosure, "at least one (item)" means one or more, and "plurality" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof refers to any combination of the items, including any combination of singular items (pieces) or plural items (pieces). For example, at least one of a, b, or c may indicate a, b, c, a and b, a and c, b and c, or a, b, and c, where a, b, and c may be singular or plural.

In descriptions of the embodiments of the present disclosure, a plurality of pieces (or items) means two or more, greater than, less than, more than, and the like are understood as excluding this number, and above, below, within, and the like are understood as including an original number.

In the several embodiments provided in the present disclosure, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical disclosure of the present disclosure essentially, or the part contributing to the conventional technology, all or some of the technical solutions may be implemented in the form of a software product. The computer software product is stored in a storage medium and includes several instructions for instructing a computing apparatus (which may be a personal computer, a server, a network apparatus, or the like) to perform all or some of the operations of the methods described in the embodiments of the present disclosure. The foregoing storage medium includes various media that can store program code, such as a USB flash drive, a removable hard disk, a read-only memory (Read-Only Memory, ROM for short), a random access memory (Random Access Memory, RAM for short), a magnetic disk, or an optical disc.

Various implementations according to the embodiments of the present disclosure can be combined in different manners to form other embodiments to achieve different technical effects.

The foregoing specifically describes the implementations of the present disclosure, but the present disclosure is not limited to the foregoing implementations. A person skilled in the art may make various equivalent variations or replacements without departing from a shared condition of the spirit of the present disclosure. All such equivalent variations or replacements fall within the scope defined by the claims of the present disclosure.

## Claims

1. A method for animation frame generation, executed by an electronic device, the method comprising:
obtaining first posture data of a first object in a first animation frame and second posture data of the first object in a second animation frame, the second animation frame being temporally after the first animation frame;
obtaining an action type feature indicating an action type of the first object by an action classifier based on the first posture data and the second posture data;
encoding the first posture data to generate a first frame feature of the first animation frame; and
concatenating the first frame feature and the action type feature into a concatenated frame feature, and decoding the concatenated frame feature to obtain at least one intermediate animation frame temporally between the first animation frame and the second animation frame.

2. The method according to claim 1, wherein the action classifier comprises a first recurrent neural network and a dimension conversion network, the action type feature represents a probability distribution of the action type of the first object over a plurality of action categories, and the obtaining the action type feature comprises:
inputting the first posture data and the second posture data into the first recurrent neural network to extract a first intermediate feature;
performing dimension conversion on the first intermediate feature using the dimension conversion network to obtain a second intermediate feature, wherein a feature dimension of the second intermediate feature is equal to the number of action categories; and
obtaining the action type feature of the first object based on the second intermediate feature, to obtain the action type feature.

3. The method according to claim 1 or 2, wherein the first recurrent neural network and the dimension conversion network are trained by:
inputting first sample posture data of a first sample object in a first sample animation sequence into the first recurrent neural network to extract a first sample feature;
performing dimension conversion on the first sample feature using the dimension conversion network to obtain a second sample feature, wherein a feature dimension of the second sample intermediate feature is equal to the number of action categories;
obtaining sample type feature representing an action type of the first sample object based on the second sample feature; and
determining a first loss based on a difference between a first action type label of the first sample object and the sample type feature, and training the first recurrent neural network and the dimension conversion network based on the first loss.

4. The method according to any one of claims 1 to 3, wherein the decoding the concatenated frame feature to obtain the at least one intermediate animation frame temporally between the first animation frame and the second animation frame comprises:
mapping the concatenated frame feature into at least one first to-be-decoded feature in an autoregressive manner using a second recurrent neural network; and
decoding each first to-be-decoded feature using a decoding network to obtain the at least one intermediate animation frame temporally between the first animation frame and the second animation frame.

5. The method according to claim 4, wherein the mapping the concatenated frame feature into at least one first to-be-decoded feature in an autoregressive manner using a second recurrent neural network comprises:
mapping the concatenated frame feature into at least one first to-be-fine-tuned feature in the autoregressive manner using a first recurrent sub-network; and
fine-tuning each first to-be-fine-tuned feature using the second recurrent sub-network to obtain the at least one first to-be-decoded feature.

6. The method according to claim 4 or 5, wherein the first recurrent sub-network comprises a plurality of sequentially cascaded processing layers, and the mapping the concatenated frame feature into at least one first to-be-fine-tuned feature in the autoregressive manner using the first recurrent sub-network comprises:
obtaining, for a first round of autoregression, a hidden state corresponding to each of the processing layers, inputting the concatenated frame feature and the hidden state corresponding to a first processing layer in the plurality of processing layers into the first processing layer for mapping, and inputting output of the first processing layer and the hidden state corresponding to a next processing layer into the next processing layer for mapping, until output of a last processing layer is obtained;
obtaining, for each round of autoregression other than the first round, the hidden state corresponding to each of the processing layers, inputting the output of the last processing layer in a previous round and the hidden state corresponding to the first processing layer into the first processing layer for mapping, and inputting the output of the first processing layer and the hidden state corresponding to the next processing layer into the next processing layer for mapping, until the output of the last processing layer is obtained; and
using the output of the last processing layer in each round as the first to-be-fine-tuned feature.

7. The method according to claim 4 or 5, wherein the first recurrent sub-network is trained by:
obtaining second sample posture data of a second sample object in a second sample animation sequence, and training the first recurrent sub-network based on the second sample posture data; and
keeping a network parameter of the trained first recurrent sub-network unchanged, and training the second recurrent sub-network based on the second sample posture data.

8. The method according to claim 7, wherein the training the first recurrent sub-network based on the second sample posture data comprises:
encoding the second sample posture data of the second sample object in a start frame in the second sample animation sequence, to generate a second frame feature;
obtaining a second action type label of the second sample object, concatenating the second frame feature and the second action type label into a sample frame feature, inputting the sample frame feature into the first recurrent sub-network in the second recurrent neural network for mapping, and outputting at least one second to-be-fine-tuned feature in the autoregressive manner;
inputting each second to-be-fine-tuned feature into the decoding network for decoding, to obtain at least one first predicted animation frame temporally after the start frame; and
determining a second loss based on a difference between each first predicted animation frame and a corresponding animation frame in the second sample animation sequence, and training the first recurrent sub-network based on the second loss.

9. The method according to claim 7 or 8, wherein the training the second recurrent sub-network based on the second sample posture data comprises:
encoding the second sample posture data of the second sample object in the start frame in the second sample animation sequence, to generate the second frame feature;
obtaining the second action type label of the second sample object, concatenating the second frame feature and the second action type label into the sample frame feature, inputting the sample frame feature into the trained first recurrent sub-network for mapping, and outputting at least one third to-be-fine-tuned feature in the autoregressive manner;
inputting each third to-be-fine-tuned feature into the second recurrent sub-network for fine-tuning, and outputting at least one second to-be-decoded feature;
inputting each second to-be-decoded feature into the decoding network for decoding, and outputting at least one second predicted animation frame temporally after the start frame; and
determining a third loss based on a difference between each second predicted animation frame and a corresponding animation frame in the second sample animation sequence, and training the second recurrent sub-network based on the third loss.

10. The method according to any one of claims 4 to 9, wherein the decoding network comprises a gating control sub-network and a plurality of decoding sub-networks, and the decoding each first to-be-decoded feature using the decoding network to obtain the at least one intermediate animation frame temporally between the first animation frame and the second animation frame comprises:
for each first to-be-decoded feature,
inputting the first to-be-decoded feature into the gating control sub-network for weight prediction, and outputting a network weight of each of the decoding sub-networks; determining, from among the plurality of decoding sub-networks based on the network weight, a target sub-network corresponding to the first to-be-decoded feature; and
decoding the first to-be-decoded feature using the target sub-network corresponding to the first to-be-decoded feature to obtain the at least one intermediate animation frame between the first animation frame and the second animation frame.

11. The method according to any one of claims 4 to 10, wherein before decoding each first to-be-decoded feature using the decoding network, the method further comprises:
obtaining third posture data of a second object in a third animation frame and fourth posture data of the second object in a fourth animation frame adjacent to the third animation frame, concatenating and encoding the third posture data and the fourth posture data to obtain an encoded feature, the fourth animation frame is temporally after the third animation frame;
inputting the encoded feature and the third posture data into the decoding network for decoding, to obtain a third predicted animation frame; and
determining a fourth loss based on a difference between the third predicted animation frame and the fourth animation frame, and training the decoding network based on the fourth loss.

12. An apparatus for animation frame generation, the apparatus being applied to an electronic device, and comprising:
a data obtaining module, configured to obtain first posture data of a first object in a first animation frame and second posture data of the first object in a second animation frame, the second animation frame being an animation frame temporally after the first animation frame;
an action classification module, configured to obtain an action type feature indicating an action type of the first object by an action classifier based on the first posture data and the second posture data;
an encoding module, configured to encode the first posture data to generate a first frame feature of the first animation frame; and
a generation module, configured to concatenate the first frame feature and the action type feature into a concatenated frame feature, and decode the concatenated frame feature to obtain at least one intermediate animation frame termporally between the first animation frame and the second animation frame.

13. An electronic device, comprising a memory and a processor, the memory having a computer program stored therein, and the processor implementing, when executing the computer program, the method according to any one of claims 1 to 11.

14. A computer-readable storage medium, the storage medium having a computer program stored therein, and the computer program, when executed by a processor, implementing the method according to any one of claims 1 to 11.

15. A computer program product, comprising a computer program, the computer program, when executed by a processor, implementing the method according to any one of claims 1 to 11.
